(19) Europäisches Patentamt / European Patent Office / Office européen des brevets

(11) **EP 3 769 856 A1**

(12) **EUROPEAN PATENT APPLICATION**
published in accordance with Art. 153(4) EPC

(43) Date of publication:
**27.01.2021 Bulletin 2021/04**

(21) Application number: **19771086.6**

(22) Date of filing: **19.03.2019**

(51) Int Cl.:
**B05D 1/36** (2006.01)  **B05D 3/00** (2006.01)
**B05D 3/02** (2006.01)  **B05D 7/24** (2006.01)

(86) International application number:
**PCT/JP2019/011617**

(87) International publication number:
**WO 2019/181990 (26.09.2019 Gazette 2019/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.03.2018 JP 2018053642**

(71) Applicant: **Kansai Paint Co., Ltd**
**Amagasaki-shi, Hyogo 661-8555 (JP)**

(72) Inventors:
• **RYOKI Takayuki**
**Hiratsuka-shi, Kanagawa 254-8562 (JP)**
• **IMANAKA Kenji**
**Hiratsuka-shi, Kanagawa 254-8562 (JP)**

(74) Representative: **Zimmermann & Partner**
**Patentanwälte mbB**
**Postfach 330 920**
**80069 München (DE)**

(54) **MULTI-LAYER COATING FILM FORMATION METHOD**

(57) The present invention relates to a multi-layer coating film formation method in which the following are performed: a step in which a primer coating film is formed; a step in which a base coating film is formed; a step in which a clear coating film is formed; and a step in which these coating films are caused to harden simultaneously. The method satisfies at least: (A) the quantity of isocyanate at the interface between a coated article and the primer coating film is 1.5 parts by mass or less, relative to 100 parts by mass of resin solids in a primer coating material; or (B) the quantity of isocyanate at the interface between the primer coating film and the base coating film is 3.5 parts by mass or less, relative to 100 parts by mass of resin solids in a base coating material.

**Description**

Technical Field

The present invention relates to a method for forming a multilayer coating film.

Background Art

In general, in manufacturing specifications of a vehicle, a glass member such as a windshield is fixed by an adhesive to a multilayer coating film including an undercoat coating film, a base coating film, and a clear coating film, which is formed on an outer plate portion of a vehicle. Here, in the case where the above outer plate is particularly a plastic member, an undercoat coating composition for forming the above undercoat coating film may be referred to as a primer coating composition.

As a multilayer coating film containing an undercoat coating film formed of an undercoat coating composition, for example, Patent Literature 1 discloses a multilayer coating including: a multi-coat coating system (A) containing at least one undercoat coating film (A1) formed of an undercoat coating composition containing at least one kind of melamine resin, and at least one clear lacquer coating film (A2) as the uppermost layer of the multi-coat coating system; and an adhesive layer (B) formed of moisture curable isocyanate-based adhesives, which is located directly on/above the uppermost cure lacquer layer of the multi-coat coating system, in which (i) all aminoplast resins contained in the undercoat coating composition are a fully methylolated and fully etherified melamine resin in which at least 90% of etherified methylol groups are etherified with butanol, and (ii) the undercoat coating composition contains at least 1.0 mass% of at least one kind of polyester binder relative to the total mass of the undercoat coating composition, the polyester binder having a hydroxyl value of at least 240 mg KOH/g and an acid value of up to 10 mg KOH/g.

Patent Literature 2 discloses a method for forming a multilayer coating film, in which the following steps (1) to (5) are sequentially performed on/above a part of an automobile body coated by electrodeposition: a step (1) of applying an intermediate coating composition (X) to an electrodeposition coating film to form an intermediate coating film; a step (2) of applying an aqueous base coating composition (Y) to the intermediate coating film formed in the above step (1) to form a base coating film; a step (3) of applying a clear coating composition (Z) containing a hydroxyl group-containing acrylic resin and a polyisocyanate compound to the base coating film formed in the above step (2) to form a clear coating film; a step (4) of heat-curing the intermediate coating film formed in the above step (1), the base coating film formed in the above step (2), and the clear coating film formed in the above step (3); and a step (5) of forming an adhesive layer on the clear coating film, in which the above intermediate coating composition (X) contains a hydroxyl group-containing polyester resin (A), a melamine resin (B), a pyrazole blocked polyisocyanate compound (C), a pigment (D), and an organic solvent (E), a ratio (B/C) of a content of the above melamine resin (B) to a content of the above pyrazole blocked polyisocyanate compound (C) is 5/35 to 20/15 in terms of a solid content ratio, a pigment weight concentration (PWC) of the pigment (D) is 40% to 60%, and a cured coating film obtained by heat-curing the above intermediate coating film has a break elongation rate at 20°C of 40% to 90%, a Young's modulus of 600 MPa to 1,600 MPa, and a Tukon hardness of 3 to 9.

Patent Literature 3 discloses an aqueous primer coating composition including an aqueous non-chlorinated polyolefin resin (A), an aqueous polyurethane resin (B), an aqueous epoxy resin (C), and an internally cross-linked acrylic particle emulsion (D), in which a content of the above (A) is 15 mass% to 60 mass%, a content of the above (B) is 10 mass% to 50 mass%, a content of the above (C) is 20 mass% to 50 mass%, and a content of the above (D) is 5 mass% to 20 mass%, in terms of the solid content, based on the total amount (100 mass%) of the above (A), (B), (C) and (D), and the above (A) is an aqueous polypropylene resin having a crystallinity of 35% to 55% and a weight average molecular weight of 50,000 to 200,000.

Patent Literature 4 discloses a chipping primer coating composition containing a styrene-ethylene-butylene copolymer having hydroxyl groups, a melamine curing agent, and a pigment, in which the pigment contains highly conductive carbon black, a ratio of the highly conductive carbon black to the other pigments is 5:1 to 1:30, a pigment weight concentration (PWC) of the highly conductive carbon black is 0.1 to 9.0 mass%, and the styrene-ethylene-butylene copolymer having hydroxyl groups has a hydroxyl value of 1 to 10 and a number average molecular weight of 40,000 to 100,000.

Citation List

Patent Literature

Patent Literature 1: JP-A-2012-524673
Patent Literature 2: JP-A-2017-154089
Patent Literature 3: JP-A-2008-56914
Patent Literature 4: JP-A-2009-102452

Summary of Invention

Technical Problem

The undercoat coating composition used in Patent Literature 1 and the intermediate coating composition used in Patent Literature 2 are suitable for being applied to a metal member, and cannot be applied to a plastic member because of problems such as adhesion.

In addition, regarding the primer coating composition disclosed in Patent Literatures 3 and 4, when a glass member such as a windshield adheres to an object having a primer coating film formed from the primer coating composition, the adhesion between the primer coating film and the object is insufficient.

An object of the present invention is to provide a method for forming a multilayer coating film, by which a multilayer coating film having excellent adhesion with an object can be formed on an object such as a plastic member.

Solution to Problem

In order to achieve the above object, the present invention encompasses the following subject matters.

<1> A method for forming a multilayer coating film, the method comprising performing the following steps sequentially:

step (1): a step of applying a primer coating composition (X) to an object to form an uncured primer coating film;
step (2): a step of applying a base coating composition (Y) to the uncured primer coating film obtained in step (1) to form an uncured base coating film;
step (3): a step of applying a solvent-based two-pack clear coating composition (Z) containing a hydroxyl group-containing resin and a polyisocyanate compound to the uncured base coating film obtained in step (2) to form an uncured clear coating film; and
step (4): a step of heating the uncured primer coating film formed in step (1), the uncured base coating film formed in step (2), and the uncured clear coating film formed in step (3) to simultaneously cure these coating films, wherein at least one of the following (A) and (B) is satisfied:

(A) an isocyanate amount at an interface between the object and the cured primer coating film is 1.5 parts by mass or less based on 100 parts by mass of a resin solid content of the primer coating composition (X), the isocyanate amount being measured by attenuated total reflection infrared spectroscopy; and
(B) an isocyanate amount at an interface between the cured primer coating film and the cured base coating film is 3.5 parts by mass or less based on 100 parts by mass of a resin solid content of the base coating composition (Y), the isocyanate amount being measured by attenuated total reflection infrared spectroscopy.

<2> The method for forming a multilayer coating film according to <1>, wherein at least one of the primer coating composition (X) and the base coating composition (Y) contains an imino group-containing melamine resin having a weight average molecular weight of 400 to 4,000.
<3> The method for forming a multilayer coating film according to <1> or <2>, wherein at least one of the primer coating composition (X) and the base coating composition (Y) contains a flat pigment.
<4> The method for forming a multilayer coating film according to any one of <1> to <3>, wherein the polyisocyanate compound has viscosity at 25°C being within a range of 0.35 Pa· s to 5 Pa·s.
<5> The method for forming a multilayer coating film according to any one of <1> to <4>, wherein at least one of the primer coating composition (X) and the base coating composition (Y) is a solvent-based coating composition.

Advantageous Effects of Invention

By the method for forming a multilayer coating film of the present invention, a multilayer coating film having excellent adhesion with an object can be formed on an object such as a plastic member. The multilayer coating film is particularly effective, for example, when a glass member such as a windshield adheres to an object having the multilayer coating film.

Description of Embodiments

Hereinafter, the method for forming a multilayer coating film in the present invention is described in detail.

The method for forming a multilayer coating film includes performing the following steps sequentially:

step (1): a step of applying a primer coating composition (X) to an object to form an uncured primer coating film;

step (2): a step of applying a base coating composition (Y) to the uncured primer coating film obtained in step (1) to form an uncured base coating film;

step (3): a step of applying a solvent-based two-pack clear coating composition (Z) containing a hydroxyl group-containing resin and a polyisocyanate compound to the uncured base coating film obtained in step (2) to form an uncured clear coating film; and

step (4): a step of heating the uncured primer coating film formed in step (1), the uncured base coating film formed in step (2), and the uncured clear coating film formed in step (3) to simultaneously cure these coating films, and at least one of the following (A) and (B) is satisfied:

(A) an isocyanate amount $\alpha$ at an interface between the object and the cured primer coating film is 1.5 parts by mass or less based on 100 parts by mass of a resin solid content of the primer coating composition (X), the isocyanate amount being measured by attenuated total reflection infrared spectroscopy; and

(B) an isocyanate amount $\beta$ at an interface between the cured primer coating film and the cured base coating film is 3.5 parts by mass or less based on 100 parts by mass of a resin solid content of the base coating composition (Y), the isocyanate amount being measured by attenuated total reflection infrared spectroscopy.

In the case where at least one of the isocyanate amount $\alpha$ and the isocyanate amount $\beta$ is within the above range, the primer coating film can be prevented from becoming too hard owing to isocyanate, and the multilayer coating film having sufficient adhesion can be obtained.

From the viewpoint of the adhesion of the obtained coating film, the isocyanate amount $\alpha$ is preferably 0.01 parts by mass to 1.0 parts by mass, and more preferably 0.01 parts by mass to 0.5 parts by mass, based on 100 parts by mass of the resin solid content of the primer coating composition (X).

From the viewpoint of the adhesion of the obtained coating film, the isocyanate amount $\beta$ is preferably 0.01 parts by mass to 2.0 parts by mass, and more preferably 0.01 parts by mass to 1.0 parts by mass, based on 100 parts by mass of the resin solid content of the base coating composition (Y).

In the present invention, the isocyanate amount at the interface between the object and the primer coating film and the isocyanate amount at the interface between the primer coating film and the base coating film are defined by a numerical value measured by attenuated total reflection infrared spectroscopy (hereinafter, referred to as ATR-IR).

First, a method for measuring the isocyanate amount $\alpha$ at the interface between the object and the primer coating film is described.

The primer coating composition (X) is applied to an object (e.g., "KOBE POLYSHEET" (trade name, manufactured by Standard Testpiece Corporation, polypropylene sheet)) so as to have a cured-film thickness of 10 $\mu$m. Next, the base coating composition (Y) is applied thereto so as to have a cured-film thickness of 15 $\mu$m. Then, the solvent-based two-pack clear coating composition (Z) is applied thereto so as to have a cured-film thickness of 30 $\mu$m. After that, the obtained coating film is baked at 80°C for 30 minutes to obtain a multilayer coating film. The multilayer coating film is cut out at any place, and the multilayer coating film is peeled from the object.

An ATR-IR measurement is performed on a surface of the multilayer coating film, on the side where the multilayer coating film was in contact with the object, under the following conditions. The infrared absorption peak intensity at 1730 cm$^{-1}$ derived from ester bonds and the infrared absorption peak intensity at 1670 cm$^{-1}$ derived from urethane bonds are measured. The numerical values of the peak area ratio (urethane-bond area/ester-bond area) are applied to a calibration curve created in advance to estimate the isocyanate amount $\alpha$.

The calibration curve is obtained by plotting the above peak area ratios of the samples obtained by adding a polyisocyanate compound (e.g., "DURANATE TLA100" (trade name, manufactured by Asahi Kasei Corporation, polyisocyanate compound)) contained in the solvent-based two-pack clear coating composition (Z) to the primer coating composition (X) (e.g., "SOFLEX 3100CD PRIMER GRAY L50" (trade name, manufactured by Kansai Paint Co., Ltd.)).

(Measurement conditions of ATR-IR)

Device: Fourier transform infrared spectrophotometer "FT/IR610" manufactured by JASCO Corporation
Measurement mode: ATR method (prism: zinc selenide, angle of incidence: 45°)

Resolution: 4 cm$^{-1}$
Number of accumulation: 16 times
Wavelength range: 400 cm$^{-1}$ to 4,000 cm$^{-1}$

Next, a method for measuring the isocyanate amount β at the interface between the primer coating film and the base coating film is described.

The method for measuring the isocyanate amount β is the same as the method for measuring the isocyanate amount α except that: (i) a multilayer coating film supplied for the measurement is obtained by applying the base coating composition (Y) to an object so as to have a cured-film thickness of 15 μm, subsequently applying the solvent-based two-pack clear coating composition (Z) thereto so as to have a cured-film thickness of 30 μm, and then performing baking at 80°C for 35 minutes; and (ii) a calibration curve is obtained by plotting the above peak area ratios of samples obtained by adding a polyisocyanate compound (e.g., "DURANATE TLA100" (trade name, manufactured by Asahi Kasei Corporation, polyisocyanate compound)) contained in the solvent-based two-pack clear coating composition (Z) to the base coating composition (Y).

The numerical values measured by the above ATR-IR are presumed to be a numerical value obtained by measuring infrared light that penetrates for 1.2 μm from the surface of the above multilayer coating film on the side where the above multilayer coating film was in contact with the object. A depth of penetration of infrared light into a sample depends on an angle of incidence of infrared light to the sample, a refractive index of the sample, a refractive index of a crystal used for the measurement, and a wavelength of infrared light, and is calculated from the following formula 1.

[Math. 1] (Formula 1)

dp: Depth of penetration
λ: Wavelength of infrared light
θ: Angle of incidence of infrared light to sample
$n_1$: Refractive index of crystal used for measurement
n2: Refractive index of sample

1. Step (1)

Step (1) is a step of applying the primer coating composition (X) to an object to form an uncured primer coating film.

[Object]

The object used in the present invention is not particularly limited, and examples of the object include a plastic member and the like.

As the plastic member, for example, a plastic member, which contains polyolefin resins obtained by (co)polymerizing at least one kind or two or more kinds of olefins having 2 to 10 carbon atoms, such as ethylene, propylene, butylene, and hexene, is particularly preferred. In addition, a plastic member, which contains polycarbonate, an acrylonitrile-butadiene-styrene (ABS) resin, a urethane resin, and polyamide, may also be used.

The plastic member is used for an automobile outer plate portion such as a bumper, a spoiler, a grill, and a fender, and an outer plate portion of home appliances.

Among the above object, the plastic member is preferred from the viewpoint of the adhesion of the obtained coating film. The method for forming a multilayer coating film in the present invention can be preferably used for a molding material, such as a molding film and molding sheet, each including these plastic members.

Prior to application of the primer coating composition (X), the above object may be subjected to a degreasing treatment, a water washing treatment, or the like as appropriate by a method common per se.

[Primer Coating Composition (X)]

The primer coating composition (X) can be used without any particular limitation as long as it is a primer coating composition that can satisfy at least one of the above (A) and (B).

As the primer coating composition (X), a coating composition in which an organic solvent and/or water is used as a main solvent and a resin component, such as a base resin and a curing agent, and a pigment are contained is preferred. The primer coating composition (X) is preferably a solvent-based coating composition using an organic solvent as a main solvent from the viewpoint of the adhesion of the obtained coating film.

(Base Resin)

In the primer coating composition (X), base resins common per se, which are used for a coating composition in the related art, may be used as the base resins, and examples of the base resins include an acrylic resin, a polyester resin, an alkyd resin, a polyurethane resin, a polyolefin resin, and the like. It is preferable that these base resins have crosslinkable functional groups, such as a hydroxyl group, a carboxyl group, and an epoxy group, in molecules thereof. One of these base resins may be used alone, or two or more kinds thereof may be used in combination.

The base resins preferably contain a polyolefin resin, and more preferably contain a chlorinated polyolefin resin and an acrylic modified chlorinated polyolefin resin (a1) and/or an acrylic modified non-chlorinated polyolefin resin (a2) (hereinafter, may be abbreviated as component (a)), from the viewpoint of the adhesion of the obtained coating film. One of these base resins may be used alone, or two or more kinds thereof may be used in combination.

As the polyolefin resin, for example, a polyolefin resin, which is obtained by (co)polymerizing at least one kind of olefin selected from olefins having 2 to 10 carbon atoms, such as ethylene, propylene, butylene, hexene, octene, and decene, particularly from olefins having 2 to 4 carbon atoms, may be used. It is possible to use a resin obtained by graft-polymerizing the polyolefin resin, in accordance with a method common per se, with unsaturated carboxylic acids such as maleic acid, fumaric acid, itaconic acid, and (meth)acrylic acid, preferably unsaturated mono- or di-carboxylic acids or anhydrides of these unsaturated carboxylic acids. In particular, a polyolefin resin modified with maleic anhydride is preferred. Further, the polyolefin resin modified with the unsaturated carboxylic acids or acid anhydrides may be modified with amines or modified with alcohols. As the amines and alcohols, one of common amines and common alcohols may be used alone, respectively, or two or more kinds thereof may be used in combination, respectively.

In the case where the polyolefin resin is used in the primer coating composition (X), a content of the polyolefin resin is preferably 15 mass% to 70 mass%, and more preferably 25 mass% to 60 mass%, based on the total amount of resin solid contents of the primer coating composition (X), from the viewpoint of the adhesion of the obtained coating film.

The chlorinated polyolefin resin is a chloride of a polyolefin resin. Examples of the polyolefin resin used as the base substance of the chlorinated polyolefin resin include a radical homopolymer or copolymer of at least one kind of olefin selected from ethylene, propylene, butene, methylbutene, and isoprene, and a radical copolymer of the olefins with vinyl acetate, butadiene, acrylic acid ester, or methacrylic acid ester.

The chlorinated polyolefin resin preferably has a weight average molecular weight within a range of 30,000 to 200,000, and more preferably has a weight average molecular weight within a range of 50,000 to 150,000.

The content of chlorine in the chlorinated polyolefin resin is preferably within a range of 10 mass% to 40 mass%. In the case where the content of chlorine is within this range, the solubility of the multilayer coating film in the solvent is not lowered. Therefore, atomization during spray coating is sufficient, and the solvent resistance of the multilayer coating film does not decrease. The content of chlorine is more preferably within a range of 12 mass% to 35 mass%.

The chlorinated polyolefin resin is preferably chlorinated polyethylene, chlorinated polypropylene, a chlorinated ethylene-propylene copolymer, a chlorinated ethylene-vinyl acetate copolymer, or the like.

In the case where the chlorinated polyolefin resin is used in the primer coating composition (X), the content thereof is preferably 15 mass% to 70 mass%, and more preferably 25 mass% to 60 mass%, based on the total amount of resin solid contents of the primer coating composition (X), from the viewpoint of the adhesion of the obtained coating film.

The above component (a) is obtained by modifying a chlorinated and/or non-chlorinated polyolefin resin with an acrylic resin, and contains an acrylic moiety and a chlorinated and/or non-chlorinated polyolefin moiety.

Examples of a method for obtaining the acrylic modified chlorinated polyolefin resin (a1) include a method in which a polyolefin resin is graft-copolymerized with $\alpha,\beta$-unsaturated carboxylic acids and/or acid anhydrides thereof to obtain an acid-modified polyolefin resin (a11), then the acid-modified polyolefin resin (a11) is chlorinated to obtain an acid-modified chlorinated polyolefin resin (a12), and next, polymerizable unsaturated monomers including hydroxyl group-containing (meth)acrylic acid ester are subjected to graft polymerization in the presence of a polymerization initiator to achieve acrylic modification. In addition, examples thereof include a method in which hydroxyl group-containing (meth)acrylic acid ester is allowed to react with the acid-modified chlorinated polyolefin resin (a12) to achieve esterification, and a double bond is introduced into the acid-modified chlorinated polyolefin resin (a12) to obtain a double bond-introduced chlorinated polyolefin resin, and then, polymerizable unsaturated monomers are graft-copolymerized with the double bond-introduced chlorinated polyolefin resin to achieve acrylic modification.

Examples of a method for obtaining the acrylic modified non-chlorinated polyolefin resin (a2) include a method in which a polyolefin resin is graft-copolymerized with $\alpha,\beta$-unsaturated carboxylic acids and/or acid anhydrides thereof to obtain an acid-modified polyolefin resin (a11), and then, polymerizable unsaturated monomers including hydroxyl group-containing (meth)acrylic acid ester are subjected to graft polymerization in the presence of a polymerization initiator to achieve acrylic modification. In addition, examples thereof include a method in which hydroxyl group-containing (meth)acrylic acid ester is allowed to react with the acid-modified polyolefin resin (a11) to achieve esterification, and a double bond is introduced into the acid-modified polyolefin resin (a11) to obtain a double bond-introduced polyolefin resin, and then, polymerizable unsaturated monomers are graft-copolymerized with the double bond-introduced polyolefin resin to achieve acrylic modification.

In the present description, the term "(meth)acrylate" means acrylate or methacrylate, and "(meth)acrylic acid" means acrylic acid or methacrylic acid.

Examples of the polyolefin resin used in the production of the above component (a) include a resin which is obtained by (co)polymerizing at least one kind of olefin selected from olefins having 2 to 10 carbon atoms, such as ethylene, propylene, butylene, hexene, octene, and decene, particularly from olefins having 2 to 4 carbon atoms.

Examples of $\alpha,\beta$-unsaturated carboxylic acids and/or acid anhydrides thereof include unsaturated carboxylic acids such as maleic acid, fumaric acid, itaconic acid, citraconic acid, and (meth)acrylic acid, or anhydrides of these unsaturated carboxylic acids. Among them, maleic acid and maleic anhydride are particularly preferred. One of these may be used alone, or two or more kinds thereof may be used in combination.

Examples of the hydroxyl group-containing (meth)acrylic acid esters include (meth)acrylic acid esters having one hydroxyl group, such as 2-hydroxyethyl (meth)acrylate, 2-hydroxypropyl (meth)acrylate, 4-hydroxybutyl (meth)acrylate, and polypropylene glycol (meth)acrylate. Among them, 2-hydroxyethyl (meth)acrylate is particularly preferred. One of these may be used alone, or two or more kinds thereof may be used in combination.

Examples of the polymerizable unsaturated monomers include alkyl esters of (meth)acrylic acid such as methyl (meth)acrylate, ethyl (meth)acrylate, propyl (meth)acrylate, butyl (meth)acrylate, hexyl (meth)acrylate, cyclohexyl (meth)acrylate, 2-ethylhexyl (meth)acrylate, lauryl (meth)acrylate, and stearyl (meth)acrylate; acrylic monomers such as (meth)acrylic acid, glycidyl (meth)acrylate, 2-hydroxyethyl (meth)acrylate, (meth)acrylamide, and (meth)acrylonitrile; styrene; and the like. Among them, butyl (meth)acrylate, hexyl (meth)acrylate, and cyclohexyl (meth)acrylate are particularly preferred. One of these may be used alone, or two or more kinds thereof may be used in combination.

The graft copolymerization reaction and the esterification reaction can be performed by a method common per se.

As the polymerization initiator, peroxide-based initiators such as benzoyl peroxide, and azo-based initiators such as azobisisobutyronitrile may be preferably used.

In the acrylic modified chlorinated polyolefin resin (a1), the glass transition temperature of the acrylic moiety is preferably -50°C to 0°C, more preferably -45°C to -5°C, and still more preferably -35°C to -15°C, from the viewpoint of the adhesion of the obtained coating film. In the acrylic modified chlorinated polyolefin resin (a1), the solid content mass ratio between the acrylic moiety and the chlorinated polyolefin moiety is preferably 7:3 to 2:8, more preferably 6.5:3.5 to 2.5:7.5, and still more preferably 6:4 to 3:7, from the viewpoint of the adhesion of the obtained coating film.

In the above component (a), the glass transition temperature of the acrylic moiety can be adjusted by the composition of the polymerizable unsaturated monomers.

In the present description, the glass transition temperature Tg is a value calculated by the following formula.

$$1/Tg\ (K) = W1/T1 + W2/T2 + \ldots Wn/Tn$$

$$Tg\ (\text{°C}) = Tg\ (K) - 273$$

In the above formula, W1, W2, ... Wn are mass fractions of respective monomers, and T1, T2, ... Tn are glass transition temperatures Tg (K) of homopolymers of respective monomers.

The glass transition temperatures of homopolymers of respective monomers are values described in POLYMERHANDBOOK Fourth Edition, edited by J.Brandrup, E.h.Immergut, and E.A.Grulke (1999). Glass transition temperatures of homopolymers of respective monomers that are not described in this literature are values obtained in the following manner. A homopolymer of a monomer is synthesized so as to have a weight average molecular weight of about 50,000, and a glass transition temperature of the homopolymer is measured by differential scanning thermal analysis.

In the primer coating composition (X), the content of the above component (a) is preferably 10 mass% to 50 mass%, and more preferably 12 mass% to 45 mass%, based on the total amount of resin solid contents in the primer coating composition (X), from the viewpoint of the adhesion of the obtained coating film.

In the present description, a resin contains a base resin and a curing agent, unless otherwise specified.

As described above, it is preferable that the base resin such as a polyester resin and an acrylic resin has crosslinkable functional groups, such as hydroxyl groups, in its molecule. The hydroxyl group-containing polyester resin and the hydroxyl group-containing acrylic resin are described below.

For example, the hydroxyl group-containing polyester resin can be obtained by subjecting polybasic acids and polyhydric alcohols to an esterification reaction with excess hydroxyl groups via a method common per se.

The polybasic acids are a compound having two or more carboxyl groups in one molecule thereof, and examples of the polybasic acids include phthalic acid, isophthalic acid, terephthalic acid, tetrahydrophthalic acid, hexahydrophthalic acid, 1,4-cyclohexanedicarboxylic acid, pyromellitic acid, itaconic acid, adipic acid, sebacic acid, azelaic acid, dodecanedioic acid, dimer acid, himic acid, succinic acid, het acid, anhydrides thereof, and the like.

The polyhydric alcohols are a compound having two or more hydroxyl groups in one molecule thereof, and examples of the polyhydric alcohols include ethylene glycol, diethylene glycol, triethylene glycol, propylene glycol, neopentyl glycol, butylene glycol, hexanediol, 2-ethyl-2-butyl-1,3-propanediol, cyclohexane dimethanol, trimethylolethane, trimethylolpropane, pentaerythritol, dipentaerythritol, sorbitol, and the like.

The esterification reaction with excess hydroxyl groups can be performed by using, for example, polyhydric alcohols having at least three hydroxyl groups in one molecule thereof in combination. As the hydroxyl group-containing polyester resin, a fatty acid modified polyester resin, which is obtained by modifying with fatty acids such as soybean oil fatty acid, castor oil fatty acid, and dehydrated castor oil fatty acid, may also be used. In addition, the hydroxyl group-containing polyester resin may be modified with epoxy compounds such as butyl glycidyl ether, alkyl phenyl glycidyl ether, and neodecanoic acid glycidyl ester, if necessary.

The hydroxyl value of the hydroxyl group-containing polyester resin is preferably within a range of 10 mg KOH/g to 150 mg KOH/g, and more preferably within a range of 50 mg KOH/g to 85 mg KOH/g, from the viewpoint of the adhesion of the obtained coating film. The acid value of the hydroxyl group-containing polyester resin is preferably within a range of 0 mg KOH/g to 50 mg KOH/g, and more preferably within a range of 1 mg KOH/g to 30 mg KOH/g, from the viewpoint of the adhesion of the obtained coating film. The number average molecular weight of the hydroxyl group-containing polyester resin is preferably within a range of 1,500 to 100,000, and more preferably within a range of 2,000 to 30,000, from the viewpoint of the adhesion of the obtained coating film.

In the primer coating composition (X), in the case where the hydroxyl group-containing polyester resin is used, the use amount thereof is preferably 5 mass% to 15 mass%, and more preferably 7 mass% to 20 mass%, based on the total amount of resin solid contents in the primer coating composition (X), from the viewpoint of the adhesion of the obtained coating film.

The hydroxyl group-containing acrylic resin can be obtained by polymerizing, for example, hydroxyl group-containing polymerizable unsaturated monomers, (meth)acrylic acid alkyl ester monomers, and if necessary, other polymerizable unsaturated monomers, in accordance with a common polymerization method, for example, a solution polymerization method or the like.

The hydroxyl group-containing polymerizable unsaturated monomers are a compound having a hydroxyl group and a polymerizable unsaturated group, and examples of the hydroxyl group-containing polymerizable unsaturated monomers include monoester products of (meth)acrylic acids and diols having 2 to 10 carbon atoms, such as hydroxyethyl (meth)acrylate, hydroxypropyl (meth)acrylate, and hydroxybutyl (meth)acrylate, ε-caprolactone modified products of compounds having these hydroxyl groups, (meth)acryloyl groups, and polymerizable unsaturated groups, and the like.

Examples of the (meth)acrylic acid alkyl ester monomers include monoester products of (meth)acrylic acids and monoalcohols having 1 to 20 carbon atoms, such as methyl (meth)acrylate, ethyl (meth)acrylate, propyl (meth)acrylate, butyl (meth)acrylate, hexyl (meth)acrylate, 2-ethylhexyl (meth)acrylate, lauryl (meth)acrylate, and stearyl (meth)acrylate, and the like.

The other polymerizable unsaturated monomers are a compound having polymerizable unsaturated groups, other than the hydroxyl group-containing polymerizable unsaturated monomers and the (meth)acrylic acid alkyl ester monomers, and examples thereof include carboxyl group-containing polymerizable unsaturated monomers such as (meth)acrylic acid and maleic acid; epoxy group-containing polymerizable unsaturated monomers such as glycidyl (meth)acrylate; and (meth)acrylamide, acrylonitrile, styrene, vinyl acetate, and vinyl chloride.

The hydroxyl value of the hydroxyl group-containing acrylic resin is preferably within a range of 10 mg KOH/g to 100 mg KOH/g, and more preferably within a range of 50 mg KOH/g to 90 mg KOH/g, from the viewpoint of the adhesion of the obtained coating film. The acid value of the hydroxyl group-containing acrylic resin is preferably within a range of 0 mg KOH/g to 50 mg KOH/g, and more preferably within a range of 2 mg KOH/g to 30 mg KOH/g, from the viewpoint of the adhesion of the obtained coating film. The weight average molecular weight of the hydroxyl group-containing acrylic resin is preferably within a range of 2,000 to 100,000, and more preferably within a range of 3,000 to 50,000, from the viewpoint of the adhesion of the obtained coating film.

In the primer coating composition (X), in the case where the hydroxyl group-containing acrylic resin is used, the use amount thereof is preferably 5 mass% to 20 mass%, and more preferably 7 mass% to 15 mass%, based on the total amount of resin solid contents in the primer coating composition (X), from the viewpoint of the adhesion of the obtained coating film.

(Curing Agent)

In the primer coating composition (X), an agent that can react with functional groups of the above base resin may be used as the curing agent. Examples of such a curing agent include a melamine resin, an epoxy resin, a polyisocyanate compound, a blocked polyisocyanate compound, a polycarbodiimide compound, and the like. One of these curing agents may be used alone, or two or more kinds thereof may be used in combination.

In particular, the weight average molecular weight of the above melamine resin is preferably within a range of 400 to 4,000, and more preferably within a range of 600 to 3,000, from the viewpoint of the adhesion of the obtained coating film.

The above melamine resin preferably contains an imino group-containing melamine resin. The number of imino groups per triazine nucleus in the above melamine resin is preferably 1 or more, and more preferably within a range of 1.2 to 2.

In the primer coating composition (X), when an imino group-containing melamine resin having a weight average molecular weight of 400 to 4,000 is used, the melamine resin complements the isocyanate. Accordingly, the isocyanate amount $\alpha$ can be reduced.

In the primer coating composition (X), in the case where the imino group-containing melamine resin having a weight average molecular weight of 400 to 4,000 is used, the content thereof is preferably 2.5 mass% to 15 mass%, and more preferably 3 mass% to 10 mass%, based on the total amount of resin solid contents of the primer coating composition (X), from the viewpoint of the adhesion of the obtained coating film.

Examples of the above epoxy resin include: bisphenol A-based epoxy resins; bisphenol F-based epoxy resins; novolac-based epoxy resins; hydrogenated bisphenol A-based epoxy resins; aliphatic epoxy resins such as ethylene glycol diglycidyl ether, diethylene glycol diglycidyl ether, polyethylene glycol diglycidyl ether, propylene glycol diglycidyl ether, polypropylene glycol diglycidyl ether, neopentyl glycol diglycidyl ether, 1,6-hexanediol diglycidyl ether, trimethylolpropane polyglycidyl ether, diglycidyl hexahydrophthalate, glycerin polyglycidyl ether, diglycerin polyglycidyl ether, and polyglycerin polyglycidyl ether; biphenyl-based epoxy resins; dicyclopentadiene-based epoxy resins; and the like. One of these epoxy resins may be used alone, or two or more kinds thereof may be used in combination.

Examples of commercial products of the above epoxy resins include the bisphenol A-based epoxy resins such as "jER827", "jER828", "jER828EL", "jER828XA", "jER834" (all manufactured by Japan Epoxy Resins Co., Ltd.), "EPICLON 840", "EPICLON 840-S", "EPICLON 850", "EPICLON 850-S", "EPICLON 850-CRP", "EPICLON 850-LC" (all manufactured by DIC Corporation), "Epotohto YD-127", "Epotohto YD-128" (both manufactured by Tohto Kasei Co., Ltd.), "Rika Resin BPO-20E", and "Rika Resin BEO-60E" (both manufactured by New Japan Chemical Co., Ltd.); the bisphenol F-based epoxy resins such as "jER806", "jER807" (both manufactured by Japan Epoxy Resins Co., Ltd.), "EPICLON 830", "EPICLON 830-S", "EPICLON 835" (all manufactured by DIC Corporation), and "Epotohto YDF-170" (manufactured by Tohto Kasei Co., Ltd.); the novolac-based epoxy resins such as "jER152" (manufactured by Japan Epoxy Resins Co., Ltd.); the hydrogenated bisphenol A-based epoxy resins such as "jERYX8000", "jERYX8034" (both manufactured by Japan Epoxy Resins Co., Ltd.), "Epotohto ST-3000" (manufactured by Tohto Kasei Co., Ltd.),"Rika Resin HBE-100" (manufactured by New Japan Chemical Co., Ltd.), "Denacol EX-252" (manufactured by Nagase Chemtex Corporation), and "SR-HBA" (manufactured by Sakamoto Yakuhin Kogyo Co., Ltd.); and the aliphatic epoxy resins such as "YED205", "YED216M", "YED216D" (all manufactured by Japan Epoxy Resins Co., Ltd.), "Epotohto YH-300", "Epotohto YH-301", "Epotohto YH-315", "Epotohto YH-324", "Epotohto YH-325" (all manufactured by Tohto Kasei Co., Ltd.),"Denacol EX-211", "Denacol EX-212", "Denacol EX-212L", "Denacol EX-214L", "Denacol EX-216L", "Denacol EX-313", "Denacol EX-314", "Denacol EX-321", "Denacol EX-321L", "Denacol EX-411", "Denacol EX-421", "Denacol EX-512", "Denacol EX-521", "Denacol EX-611", "Denacol EX-612", "Denacol EX-614", "Denacol EX-614B", "Denacol EX-622", "Denacol EX-810", "Denacol EX-811", "Denacol EX-850", "Denacol EX-850L", "Denacol EX-851", "Denacol EX-821", "Denacol EX-830", "Denacol EX-832", "Denacol EX-841", "Denacol EX-861", "Denacol EX-911", "Denacol EX-941", "Denacol EX-920", "Denacol EX-931" (all manufactured by Nagase Chemtex Corporation)," SR-NPG", "SR-16H", "SR-16HL", "SR-TMP", "SR-PG", "SR-TPG", "SR-4PG", "SR-2EG", "SR-8EG", "SR-8EGS", "SR-GLG", "SR-DGE", "SR-DGE", "SR-4GL", "SR-4GLS", and "SR-SEP" (all manufactured by Sakamoto Yakuhin Kogyo Co., Ltd.).

The epoxy equivalent of the above epoxy resin is preferably within a range of 170 g/equivalent to 4,000 g/equivalent, and more preferably within a range of 220 g/equivalent to 2,700 g/equivalent, from the viewpoint of the adhesion of the obtained coating film.

The molecular weight of the epoxy resin is preferably within a range of 170 to 2,800, and more preferably within a range of 200 to 800, from the viewpoint of the adhesion of the obtained coating film. The epoxy resin preferably has a hydroxyl group from the viewpoint of the adhesion of the obtained coating film.

In the primer coating composition (X), in the case where the above epoxy resin is used, the content thereof is preferably 1 mass% to 20 mass%, and more preferably 5 mass% to 15 mass%, based on the total amount of resin solid contents in the primer coating composition (X), from the viewpoint of the adhesion of the obtained coating film.

In particular, the epoxy resin preferably contains a polysulfide modified epoxy resin from the viewpoint of the adhesion of the obtained coating film. The polysulfide modified epoxy resin is a bisphenol-based epoxy resin having a compound containing a bisphenol skeleton, and a polysulfide skeleton in a molecular main chain thereof.

Examples of the compound containing the above bisphenol skeleton include a bisphenol A-based epoxy resin, a bisphenol AD-based epoxy resin, a halogenated bisphenol A-based epoxy resin, a bisphenol F-based epoxy resin, a halogenated bisphenol F-based epoxy resin, and the like. Among them, the bisphenol F-based epoxy resin is particularly preferred from the viewpoint of the adhesion of the obtained coating film.

The number average molecular weight of the polysulfide modified epoxy resin is preferably within a range of 350 to 4,500, and more preferably within a range of 900 to 3,500, from the viewpoint of the adhesion of the obtained coating film. The epoxy equivalent of the polysulfide modified epoxy resin is preferably within a range of 110 g/equivalent to 500 g/equivalent, more preferably within a range of 130 g/equivalent to 400 g/equivalent, and still more preferably within a range of 150 g/equivalent to 350 g/equivalent, from the viewpoint of the adhesion of the obtained coating film.

The polysulfide modified epoxy resin preferably has viscosity at 25°C of 3,000 poise or less, and more preferably has viscosity at 25°C of 100 poise to 300 poise, from the viewpoint of ease of handling.

Examples of commercial products of the polysulfide modified epoxy resin include "FLEP-10", "FLEP-50", "FLEP-60", "FLEP-65", "FLEP-80", "FLEP-120X", "FLEP-125X", "FLEP-410C", "FVD-103X", "FVD-105X", "FVD-423C" (all are trade names, manufactured by Toray Fine Chemicals Co., Ltd.), and the like.

In the primer coating composition (X), in the case where the above polysulfide modified epoxy resin is used, the content thereof is preferably 5 mass% to 25 mass%, more preferably 7 mass% to 20 mass%, and still more preferably 10 mass% to 18 mass%, based on the total amount of resin solid contents in the primer coating composition (X), from the viewpoint of the adhesion of the obtained coating film.

The polyisocyanate compound is a compound having at least two isocyanate groups in one molecule. The blocked polyisocyanate compound is a polyisocyanate compound in which an isocyanate group in a molecule thereof is blocked by a blocking agent.

Examples of the polyisocyanate compound include aliphatic polyisocyanate compounds, alicyclic polyisocyanate compounds, araliphatic polyisocyanate compounds, aromatic polyisocyanate compounds, derivatives of these polyisocyanate compounds, and the like. One of these polyisocyanate compounds may be used alone, or two or more kinds thereof may be used in combination.

Examples of the above aliphatic polyisocyanate compounds include aliphatic diisocyanate compounds such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate), aliphatic triisocyanate compounds such as 2-isocyanatoethyl 2,6-diisocyanatohexanoate, 1,6-diisocyanate 3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane, and the like.

Examples of the above alicyclic polyisocyanate compounds include alicyclic diisocyanate compounds such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), methyl-2,4-cyclohexanediisocyanate, methyl-2,6-cyclohexanediisocyanate, 1,3- or 1,4-bis(isocyanatomethyl)cyclohexane (common name: hydrogenated xylylene diisocyanate) or mixtures thereof, methylenebis(1,4-cyclohexanediyl)diisocyanate (common name: hydrogenated MDI), and norbornane diisocyanate, alicyclic triisocyanate compounds such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, 6-(2-isocyanatoethyl)-2-isocyanatomethyl-2-(3-isocyanatopropyl)-bicyclo(2.2.1)heptane, and the like.

Examples of the above araliphatic polyisocyanate compounds include araliphatic diisocyanate compounds such as methylenebis(1,4-phenylene)diisocyanate (common name: MDI), 1,3- or 1,4-xylylene diisocyanate or mixtures thereof, $\omega,\omega'$-diisocyanato-1,4-diethylbenzene, and 1,3- or 1,4-bis(1-isocyanato-1-methylethyl)benzene (common name: tetramethylxylylene diisocyanate) or mixtures thereof, araliphatic triisocyanate compounds such as 1,3,5-triisocyanatomethylbenzene, and the like.

Examples of the above aromatic polyisocyanates include aromatic diisocyanates such as m-phenylene diisocyanate, p-phenylene diisocyanate, 4,4'-diphenyl diisocyanate, 1,5-naphthalene diisocyanate, 2,4- or 2,6-tolylene diisocyanate or mixtures thereof, 4,4'-toluidine diisocyanate, and 4,4'-diphenyl ether diisocyanate, aromatic triisocyanates such as triphenylmethane-4,4',4"-triisocyanate, 1,3,5-triisocyanate benzene, and 2,4,6-triisocyanate toluene, aromatic tetraisocyanates such as 4,4'-diphenylmethane-2,2',5,5'-tetraisocyanate, and the like.

Examples of the derivatives of the polyisocyanates include a dimer, trimer, biuret, allophanate, uretdione, urethoimine, isocyanurate, oxadiazinetrione, polymethylene polyphenyl polyisocyanate (crude MDI; polymeric MDI), and crude TDI, of the above polyisocyanate compounds.

From the viewpoint of the adhesion of the obtained coating film, the above polyisocyanate compounds are preferably alicyclic diisocyanates and derivatives of the alicyclic diisocyanates, and more preferably alicyclic diisocyanates.

In the primer coating composition (X), in the case where the above polyisocyanate compounds are used, the content thereof is preferably 1 mass% to 25 mass%, and more preferably 5 mass% to 20 mass%, based on the total amount of resin solid contents in the primer coating composition (X), from the viewpoint of the adhesion of the obtained coating film.

The blocked polyisocyanate compounds can be obtained by, for example, adding a blocking agent to isocyanate groups of the above polyisocyanate compounds. The blocked polyisocyanate compounds are stable at normal temperature, but when heated at a baking temperature of the coating film (generally about 90°C to about 200°C), it is desirable that the blocking agent is dissociated to regenerate free isocyanate groups.

Examples of blocking agents that meet these requirements include the following blocking agents: phenol-based blocking agents such as phenol, cresol, xylenol, nitrophenol, ethylphenol, hydroxydiphenyl, butylphenol, isopropylphenol, nonylphenol, octylphenol, and methyl hydroxybenzoate; lactam-based blocking agents such as $\varepsilon$-caprolactam, $\delta$-valero-lactam, $\gamma$-butyrolactam, and $\beta$-propiolactam; aliphatic alcohol-based blocking agents such as methanol, ethanol, propyl alcohol, butyl alcohol, amyl alcohol, and lauryl alcohol; ether-based blocking agents such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; benzyl alcohol; glycolic acid; glycolate-based blocking agents such as methyl glycolate, ethyl glycolate, and butyl glycolate; lactic acid ester-based blocking agents such as lactic acid, methyl lactate, ethyl lactate, and butyl lactate; alcohol-based blocking agents such as methylol urea, methylol melamine, diacetone alcohol, 2-hydroxyethyl acrylate, and 2-hydroxyethyl methacrylate; oxime-based blocking agents such as formamide oxime, acetamide oxime, acetoxime, methyl ethyl ketoxime, diacetyl monooxime, benzophenone oxime, and cyclohexane oxime; malonic acid dialkyl ester-based blocking agents such as dimethyl malonate, diethyl malonate, diisopropyl malonate, di-n-butyl malonate, diethyl methylmalonate, benzylmethyl malonate, and diphenyl malonate; acetoacetic acid ester-based blocking agents such as methyl acetoacetate, ethyl acetoacetate, isopropyl acetoacetate, n-propyl acetoacetate, benzyl acetoacetate, and phenyl acetoacetate; active methylene-based blocking agents such as acetylacetone; mercaptan-based blocking agents such as butyl mercaptan, t-butyl mercaptan, hexyl mercaptan, t-dodecyl mercaptan, 2-mercaptobenzothiazole, thiophenol, methylthiophenol, and ethyl thiophenol; acid amide-based blocking agents such as acetanilide, acetanisidide, acetotoluide, acrylamide, methacrylamide, amide acetate, stearic acid amide, and benzamide; imide-based blocking agents such as succinimide, phthalimide, and maleimide; amine-based blocking agents such as diphenylamine, phenylnaphthylamine, xylidine, N-phenylxylidine, carbazole, aniline, naphthylamine, butylamine, dibutylamine, and butylphenylamine; imidazole-based blocking agents such as imidazole and 2-ethylimidazole; pyrazole-based blocking agents such as 3,5-dimethylpyrazole; urea-based blocking agents such as urea, thiourea, ethylene urea, ethylene thiourea, and diphenylurea; carbamic acid ester-based blocking agents such as phenyl N-phenylcarbamate; imine-based blocking agents such as ethyleneimine and propyleneimine; sulfite-based blocking agents such as sodium bisulfite and potassium bisulfate; and the like. From the viewpoint of the low-temperature curability and the adhesion of the obtained coating film, the active methylene-based blocking agents are particularly preferred among the above blocking agents.

In the primer coating composition (X), in the case where the above blocked polyisocyanate compounds are used, the content thereof is preferably within a range of 1 mass% to 25 mass%, and more preferably within a range of 5 mass% to 20 mass%, based on the total amount of resin solid contents in the primer coating composition (X), from the viewpoint of the adhesion of the obtained coating film.

The polycarbodiimide compound is a compound having at least two carbodiimide groups in one molecule.

Examples of commercial products of the polycarbodiimide compound include "Carbodilite SV-02", "Carbodilite V-02", "Carbodilite V-02-L2", "Carbodilite V-04", "Carbodilite E-01", and "Carbodilite E-02" (all manufactured by Nisshinbo).

In the primer coating composition (X), in the case where the above polycarbodiimide compound is used, the content thereof is preferably 1 mass% to 25 mass%, and more preferably 5 mass% to 20 mass%, based on the total amount of resin solid contents in the primer coating composition (X), from the viewpoint of the adhesion of the obtained coating film.

(Pigment)

In the primer coating composition (X), a common pigment can be used as the pigment without limitation, and it is preferable to use a flat pigment.

In the primer coating composition (X), when the flat pigment is used, the flat pigment physically inhibits movement of isocyanate. Accordingly, the isocyanate amount $\alpha$ can be reduced.

Examples of the flat pigment include mica, alumina, talc, silica, aluminum flakes, and the like. These flat pigments may be used alone, or two or more kinds thereof may be used in combination. Examples of the mica include mica, aluminum oxide coated with titanium oxide or iron oxide, mica coated with titanium oxide or iron oxide, and the like.

Among the above flat pigments, it is preferable to use a flat pigment having an average particle diameter of 8

μm or more, from the viewpoint of the adhesion of the obtained coating film.

In the case where the primer coating composition (X) contains the above flat pigments, a content of the flat pigments is preferably within a range of 1 mass% to 20 mass%, more preferably within a range of 2 mass% to 15 mass%, and still more preferably within a range of 3 mass% to 12 mass%, based on the total amount of resin solid contents (100 parts by mass) in the primer coating composition (X).

As to the pigments, color pigments, extender pigments, and conductive pigments may be used as a pigment other than the flat pigments.

Examples of the color pigments include titanium oxide, carbon black, chrome yellow, loess, yellow iron oxide, hansa yellow, pigment yellow, chrome orange, chrome vermillion, permanent orange, amber, permanent red, brilliant carmine, fast violet, methyl violet lake, ultramarine, iron blue, cobalt blue, phthalocyanine blue, pigment green, naphthol green, and the like. Among these color pigments, titanium oxide and carbon black are particularly preferred. One of these color pigments may be used alone, or two or more kinds thereof may be used in combination.

In the case where the primer coating composition (X) contains titanium oxide as the above color pigments, a content of the titanium oxide is preferably 100 mass% to 150 mass%, and more preferably 110 mass% to 140 mass%, based on the total amount of the resin solid contents in the primer coating composition (X), from the viewpoint of the adhesion of the obtained coating film.

Examples of the extender pigments include calcium carbonate, barium sulfate, zinc white (zinc oxide), and the like. One of these extender pigments may be used alone, or two or more kinds thereof may be used in combination.

In the case where the primer coating composition (X) contains the above extender pigments, a content of the above extender pigments is preferably 1 mass% to 20 mass%, and more preferably 3 mass% to 15 mass%, based on the total amount of resin solid contents in the primer coating composition (X) from the viewpoint of the adhesion of the obtained coating film.

The conductive pigments are not particularly limited as long as they can impart conductivity to a coating film to be formed, and any of a particle shape, a flake shape, and a fiber (including a whisker) shape may be used.

Specific examples of the conductive pigments include conductive carbons such as conductive carbon, carbon nanotubes, carbon nanofibers, and carbon micro coils, and metals such as silver, nickel, copper, graphite, and aluminum. Examples of the conductive pigments further include: tin oxide doped with antimony, tin oxide doped with phosphorus, tin oxide and/or acicular titanium oxide whose surface is coated with antimony, antimony oxide, zinc antimonate, and indium tin oxide; pigments in which a whisker surface of carbon or graphite is coated with tin oxide; pigments in which a flaky mica surface is coated with conductive metal oxides such as tin oxide or antimony doped tin oxide; a conductive pigment composed of titanium oxide particles containing tin oxide and phosphorus on a surface thereof; and the like. One of these conductive pigments may be used alone, or two or more kinds thereof may be used in combination. Among these conductive pigments, the conductive carbon may be particularly preferably used.

In the case where the primer coating composition (X) contains conductive carbon as the above conductive pigments, a content of the conductive carbon is preferably 1 mass% to 10 mass%, and more preferably 2 mass% to 7 mass%, based on the total amount of the resin solid contents in the primer coating composition (X), from the viewpoint of the adhesion of the obtained coating film.

(Organic Solvent)

As described above, in the primer coating composition (X), an organic solvent is mainly used as a solvent.

The organic solvent is not particularly limited as long as it can dissolve or disperse the above base resin and the above curing agent by mixing them, and examples of the organic solvent include solvents such as an aliphatic hydrocarbon-based solvent, an aromatic hydrocarbon-based solvent, an alcohol-based solvent, an ester-based solvent, and a ketone-based solvent.

(Other Components)

The primer coating composition (X) may further contain additives for coating compositions, such as a silane coupling agent, a thickener, an antifoam, a surface conditioner, and a film-forming aid, if necessary.

Examples of the silane coupling agent include 2-(3,4-epoxycyclohexyl) ethyltrialkoxysilane, 3-glycidoxypropyl trialkoxysilane, 3-glycidoxypropyl methyldialkoxysilane, N-2-(aminoethyl)-3-aminopropyl methyldialkoxysilane, N-2-(aminoethyl)-3-aminopropyl trialkoxysilane, 3-aminopropyl trialkoxysilane, 3-aminopropyl methyldialkoxysilane, 3-mercaptopropyl methyldialkoxysilane, 3-mercaptopropyl trialkoxysilane, N-phenyl-3-aminopropyl trialkoxysilane, 3-ureidopropyl trialkoxysilane, 3-chloropropyl trialkoxysilane, bis(trialkoxysilylpropyl) tetrasulfide, 3-isocyanatopropyl trialkoxysilane, and the like. One of these silane coupling agents may be used alone, or two or more kinds thereof may be used in combination.

It is preferable that the primer coating composition (X) further contains a curing catalyst from the viewpoint of the adhesion of the obtained coating film.

Examples of the curing catalyst include a quaternary salt catalyst such as tetraethylammonium bromide, tetrabutylammonium bromide, tetraethylammonium chloride, tetrabutylphosphonium bromide, and triphenylbenzylphosphonium chloride; and amines such as triethylamine and tributylamine.

(Method for Preparing Primer Coating Composition (X))

The primer coating composition (X) can be prepared by a common method. The primer coating composition (X) can be prepared by dissolving or dispersing, for example, a base resin, a curing agent, a pigment, and the above other components if necessary, in an organic solvent.

(Application of Primer Coating Composition (X))

The primer coating composition (X) can be applied to the above object so as to have a cured-film thickness being preferably within a range of 1 $\mu$m to 20 $\mu$m, and more preferably within a range of 3 $\mu$m to 15 $\mu$m, by using air spray, airless spray, dip coating, brush, or the like. After the primer coating composition (X) is applied, the obtained primer coating film surface may be allowed to stand at room temperature for about 30 seconds to about 60 minutes, if necessary.

2. Step (2)

Step (2) is a step of applying the base coating composition (Y) to the uncured primer coating film obtained in step (1) to form an uncured base coating film.

[Base Coating Composition (Y)]

The base coating composition (Y) can be used without any particular limitation as long as it is a base coating composition that can satisfy at least one of the above (A) and (B).

As the base coating composition (Y), a coating composition in which an organic solvent and/or water is used as a main solvent and a resin component, such as a base resin and a curing agent, and a pigment are contained is preferred. The base coating composition (Y) is preferably a solvent-based coating composition using an organic solvent as a main solvent is preferred, from the viewpoint of the adhesion of the obtained coating film.

(Base Resin)

Examples of the base resin used for the base coating composition (Y) include resins, such as an acrylic resin, a polyester resin, and an alkyd resin, which have reactive functional groups such as a hydroxyl group, an epoxy group, a carboxyl group, and a silanol group. Among them, the hydroxyl group-containing acrylic resin and the hydroxyl group-containing polyester resin are preferred from the viewpoint of the adhesion of the obtained coating film.

As the hydroxyl group-containing acrylic resin, resins same as those described in the section of the above primer coating composition (X) may be used.

The hydroxyl value of the hydroxyl group-containing acrylic resin is preferably within a range of 10 mg KOH/g to 100 mg KOH/g, and more preferably within a range of 50 mg KOH/g to 90 mg KOH/g, from the viewpoint of the adhesion of the obtained coating film. The acid value of the hydroxyl group-containing acrylic resin is preferably within a range of 0 mg KOH/g to 50 mg KOH/g, and more preferably within a range of 2 mg KOH/g to 30 mg KOH/g, from the viewpoint of the adhesion of the obtained coating film. The weight average molecular weight of the hydroxyl group-containing acrylic resin is preferably within a range of 2,000 to 100,000, and more preferably within a range of 3,000 to 50,000, from the viewpoint of the adhesion of the obtained coating film.

In the base coating composition (Y), in the case where the hydroxyl group-containing acrylic resin is used, the use amount thereof is preferably 20 mass% to 70 mass%, and more preferably 30 mass% to 65 mass%, based on the total amount of resin solid contents in the base coating composition (Y), from the viewpoint of the adhesion of the obtained coating film.

As the hydroxyl group-containing polyester resin, resins same as those described in the section of the above primer coating composition (X) may be used.

The hydroxyl value of the hydroxyl group-containing polyester resin is preferably within a range of 10 mg KOH/g to 150 mg KOH/g, and more preferably within a range of 50 mg KOH/g to 85 mg KOH/g, from the viewpoint of the adhesion of the obtained coating film. The acid value of the hydroxyl group-containing polyester resin is preferably within a range of 0 mg KOH/g to 50 mg KOH/g, and more preferably within a range of 1 mg KOH/g to 30 mg KOH/g, from the viewpoint of the adhesion of the obtained coating film. The number average molecular weight of the hydroxyl group-containing polyester resin is preferably within a range of 1,500 to 100,000, and more preferably within a range of 2,000 to 30,000, from the viewpoint of the adhesion of the obtained coating film.

In the base coating composition (Y), in the case where the hydroxyl group-containing polyester resin is used, the use amount thereof is preferably 15 mass% to 45 mass%, and more preferably 20 mass% to 40 mass%, based on the total amount of resin solid contents in the base coating composition (Y), from the viewpoint of the adhesion of the obtained coating film.

(Curing Agent)

The curing agent and the preferred content of the curing agent in the base coating composition (Y) are the same as those described in the section of the above primer coating composition (X).

In the base coating composition (Y), an agent that can react with functional groups of the above base resin can be used as the curing agent. Examples of such a curing agent include a melamine resin, an epoxy resin, a polyisocyanate compound, a blocked polyisocyanate compound, a polycarbodiimide compound, and the like. One of these curing agents may be used alone, or two or more kinds thereof may be used in combination.

In particular, the weight average molecular weight of the above melamine resin is preferably within a range of 400 to 4,000, and more preferably within a range of 600 to 3,000, from the viewpoint of the adhesion of the obtained coating film.

The above melamine resin preferably contains an imino group-containing melamine resin. The number of imino groups per triazine nucleus in the above melamine resin is preferably 1 or more, and more preferably within a range of 1.2 to 2.

In the base coating composition (Y), when an imino group-containing melamine resin having a weight average molecular weight of 400 to 4,000 is used, the melamine resin complements the isocyanate. Accordingly, the isocyanate amount $\beta$ can be reduced.

In the base coating composition (Y), in the case where the imino group-containing melamine resin having a weight average molecular weight of 400 to 4,000 is used, the content thereof is 2.5 mass% to 15 mass%, and preferably 3 mass% to 10 mass%, based on the total amount of resin solid contents of the base coating composition (Y), from the viewpoint of the adhesion of the obtained coating film.

(Pigment)

The pigment and the preferred content of the pigment in the base coating composition (Y) are the same as those described in the section of the above primer coating composition (X).

In the base coating composition (Y), a common pigment may be used as the pigment without limitation, and it is preferable to use a flat pigment.

In the base coating composition (Y), when the flat pigment is used, the flat pigment physically inhibits movement of isocyanate. Accordingly, the isocyanate amount $\beta$ can be reduced.

Examples of the flat pigment include mica, alumina, talc, silica, aluminum flakes, and the like. These flat pigments may be used alone, or two or more kinds thereof may be used in combination. Examples of the mica include mica, aluminum oxide coated with titanium oxide or iron oxide, mica coated with titanium oxide or iron oxide, and the like.

Among the above flat pigments, it is preferable to use a flat pigment having an average particle diameter of 8 $\mu$m or more, from the viewpoint of the chipping resistance of the obtained coating film.

In the case where the base coating composition (Y) contains the above flat pigment, the blending amount of the flat pigment is generally within a range of 1 part by mass to 20 parts by mass, preferably within a range of 2 parts by mass to 15 parts by mass, and more preferably within a range of 3 parts by mass to 12 parts by mass, based on the total amount of resin solid contents (100 parts by mass) in the base coating composition (Y).

In the pigments, color pigments, extender pigments, and the like may be used as a pigment other than the flat pigment. As the color pigments and the extender pigments, pigments same as those described in the section of the above primer coating composition (X) may be used.

(Organic Solvent)

As described above, in the base coating composition (Y), an organic solvent is preferably used as a main solvent.

The organic solvent is not particularly limited as long as it can dissolve or disperse the above base resin and the above curing agent by mixing them, and examples thereof include solvents such as an aliphatic hydrocarbon-based solvent, an aromatic hydrocarbon-based solvent, an alcohol-based solvent, an ester-based solvent, and a ketone-based solvent.

(Other Components)

The base coating composition (Y) may further contain additives for coating compositions, such as a curing catalyst, an ultraviolet ray absorber, a paint surface conditioner, a rheology control agent, an antioxidant, an antifoam, wax, and preservative, if necessary.

(Method for Preparing Base Coating Composition (Y))

The base coating composition (Y) can be prepared by a common method. The base coating composition (Y) can be prepared by dissolving or dispersing, for example, a base resin, a curing agent, a pigment, and the above other components if necessary, in an organic solvent.

(Application of Base Coating Composition (Y))

The base coating composition (Y) can be applied to the above uncured primer coating film so as to have a cured-film thickness being preferably within a range of 5 $\mu$m to 50 $\mu$m, more preferably within a range of 5 $\mu$m to 30 $\mu$m, and still more preferably within a range of 10 $\mu$m to 20 $\mu$m, by using air spray, airless spray, dip coating, brush, or the like. After the base coating composition (Y) is applied, the obtained base coating film surface may be allowed to stand at room temperature for about 1 minute to about 60 minutes, if necessary.

3. Step (3)

Step (3) is a step of applying the solvent-based two-pack clear coating composition (Z) containing the hydroxyl group-containing resin and the polyisocyanate compound to the uncured base coating film obtained in step (2) to form an uncured clear coating film.

[Solvent-based Two-pack Clear Coating Composition (Z)]

The solvent-based two-pack clear coating composition (Z) is a two-pack clear coating composition containing a hydroxyl group-containing resin serving as a main agent, and a polyisocyanate compound serving as a curing agent.

(Hydroxyl Group-Containing Resin)

As the hydroxyl group-containing resin serving as a base material, any resin common in the related art may be used without limitation as long as it contains a hydroxyl group. Examples of the hydroxyl group-containing resin include a hydroxyl group-containing acrylic resin, a hydroxyl group-containing polyester resin, a hydroxyl group-containing polyether resin, a hydroxyl group-containing polyurethane resin, and the like. The hydroxyl group-containing acrylic resin and the hydroxyl group-containing polyester resin are preferred, and the hydroxyl group-containing acrylic resin is particularly preferred.

The hydroxyl value of the hydroxyl group-containing acrylic resin is preferably within a range of 80 mg KOH/g to 200 mg KOH/g, and more preferably within a range of 100 mg KOH/g to 180 mg KOH/g. In the case where the hydroxyl value is 80 mg KOH/g or more, the crosslinking density is high, and thus, the scratch resistance of the multilayer coating film is sufficient. In the case where the hydroxyl value is 200 mg KOH/g or less, the water resistance of the multilayer coating film is satisfied.

The weight average molecular weight of the hydroxyl group-containing acrylic resin is preferably within a range of 2,500 to 40,000, and more preferably within a range of 5,000 to 30,000. In the case where the weight average molecular weight is 2,500 or more, the performance of the multilayer coating film, such as acid resistance, is satisfied. In the case where the weight average molecular weight is 40,000 or less, the smoothness of the multilayer coating film is sufficient, and thus, the finishing property of the multilayer coating film is satisfied.

In the present description, each of the weight average molecular weight and the number average molecular weight is a value determined from a chromatogram measured by gel permeation chromatograph, based on the molecular weight of standard polystyrene. As the gel permeation chromatograph, "HLC8120GPC" (manufactured by Tosoh Corporation) may be used. As the column, four columns of "TSKgel G-4000 HXL", "TSKgel G-3000 HXL", "TSKgel G-2500HXL", and "TSKgel G-2000 HXL" (trade name, all manufactured by Tosoh Corporation) may be used, and the measurement can be carried out under the conditions that the mobile phase is tetrahydrofuran, the measurement temperature is 40°C, the flow rate is 1 cc/min, and the detector is RI.

The glass transition temperature of the hydroxyl group-containing acrylic resin is preferably within a range of -40°C to 20°C, and more preferably within a range of -30°C to 10°C. In the case where the glass transition temperature is -40°C or higher, the hardness of the multilayer coating film is sufficient. In addition, in the case where the glass transition temperature is 20°C or lower, the smoothness of the coating surface of the multilayer coating film is satisfied.

(Polyisocyanate Compound)

The polyisocyanate compound serving as a curing agent is a compound having at least two isocyanate groups in one molecule. Examples of the polyisocyanate compound include aliphatic polyisocyanate compounds, alicyclic polyisocyanate compounds, araliphatic polyisocyanate compounds, aromatic polyisocyanate compounds, derivatives of any one of these polyisocyanate compounds, and the like.

Examples of the above aliphatic polyisocyanate compounds include: aliphatic diisocyanate compounds such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); aliphatic triisocyanate compounds such as 2-isocyanatoethyl 2,6-diisocyanatohexanoate, 1,6-diisocyanate 3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane; and the like.

Examples of the above alicyclic polyisocyanate compounds include alicyclic diisocyanate compounds such as 4,4'-methylenebis(cyclohexyl isocyanate), 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, methylenebis(4,1-cyclohexanediyl)diisocyanate (common name: hydrogenated MDI), and norbornane diisocyanate; alicyclic triisocyanate compounds such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, 6-(2-isocyanatoethyl)-2-isocyanatomethyl-2-(3-isocyanatopropyl)-bicyclo(2.2.1)heptane; and the like.

Examples of the above araliphatic polyisocyanate compounds include araliphatic diisocyanate compounds such as methylenebis(4,1-phenylene)diisocyanate (common name: MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (common name: tetramethylxylylene diisocyanate) or mixtures thereof; araliphatic triisocyanate compounds such as 1,3,5-triisocyanatomethylbenzene; and the like.

Examples of the above aromatic polyisocyanate compounds include aromatic diisocyanate compounds such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI) or mixtures thereof, 4,4'-toluidine diisocyanate, and 4,4'-diphenyl ether diisocyanate; aromatic triisocyanate compounds such as triphenylmethane-4,4',4"-triisocyanate, 1,3,5-triisocyanatobenzene, and 2,4,6-triisocyanatotoluene; aromatic tetraisocyanate compounds such as 4,4'-diphenylmethane-2,2',5,5'-tetraisocyanate; and the like.

Examples of the derivatives of the above polyisocyanate compounds include a dimer, a trimer, a biuret, an allophanate, a uretdione, a urethoimine, an isocyanurate, an oxadiazinetrione, a polymethylene polyphenyl polyisocyanate (crude MDI; polymeric MDI), and a crude TDI, of the above polyisocyanate compounds.

One of the above polyisocyanate compounds and derivatives thereof may be used alone, or two or more kinds thereof may be used in combination.

Among the above polyisocyanate compounds and derivatives thereof, the aliphatic diisocyanate compounds and derivatives thereof, and alicyclic diisocyanate compounds and derivatives thereof are preferred. Among the aliphatic diisocyanate compounds and derivatives thereof, hexamethylene diisocyanate and derivatives thereof are more preferred. Among the alicyclic diisocyanate compounds and derivatives thereof, 4,4'-methylenebis(cyclohexyl isocyanate) is more preferred. Among the above polyisocyanate compounds and derivatives thereof, derivatives of hexamethylene diisocyanate are the most preferred from the viewpoint of adhesiveness and compatibility.

As the above polyisocyanate compounds, a prepolymer, which is obtained by allowing the above polyisocyanate compounds and derivatives thereof to react with a compound that can react with the polyisocyanate compounds and the derivatives thereof under the conditions of excess isocyanate groups, may be used. Examples of the compound that can react with the polyisocyanate compounds and the derivatives thereof include a compound having active hydrogen groups such as a hydroxyl group and an amino group. Examples of the compound having active hydrogen groups include polyhydric alcohols, low molecular weight polyester resins, amines, water, and the like.

From the viewpoint of the adhesion of the multilayer coating film, the viscosity at 25°C of the polyisocyanate compounds is preferably within a range of 0.35 Pa·s to 5 Pa· s, more preferably within a range of 0.4 Pa·s to 4 Pa· s, and still more preferably within a range of 0.45 Pa·s to 2 Pa·s.

When the polyisocyanate compound having viscosity within the above range is used, the movement of the isocyanate in the polyisocyanate compounds is restricted, and the isocyanate amount $\alpha$ and the isocyanate amount $\beta$ can be reduced.

(Other Components)

The solvent-based two-pack clear coating composition (Z) may appropriately contain a solvent such as an organic solvent, and an additive such as a curing catalyst, an antifoam, and an ultraviolet ray absorber, if necessary.

The solvent-based two-pack clear coating composition (Z) may appropriately contain color pigments within a range where the transparency of the multilayer coating film is not impaired. As the color pigments, common pigments for inks or coating compositions in the related art may be used alone or in combination of two or more kinds thereof. The addition amount of the color pigments may be appropriately determined, and is preferably 30 parts by mass or less, and more preferably 0.01 parts by mass to 10 parts by mass, relative to 100 parts by mass of vehicle-forming resin compositions in the solvent-based two-pack clear coating composition (Z).

(Method for Preparing Solvent-based Two-pack Clear Coating Composition (Z))

The solvent-based two-pack clear coating composition (Z) can be prepared by a common method. The solvent-based two-pack clear coating composition (Z) can be prepared by mixing a hydroxyl group-containing resin serving as a main agent, a polyisocyanate compound serving as a curing agent, and the other components described above if necessary, immediately before use.

From the viewpoint of the curability and the scratch resistance of the multilayer coating film, the hydroxyl group-containing resin and the polyisocyanate compound are preferably mixed in a ratio such that an equivalent ratio (NCO/OH) of isocyanate groups of the polyisocyanate compound to hydroxyl groups of the hydroxyl group-containing resin is within a range of 0.5 to 2, and more preferably within a range of 0.8 to 1.5.

The solid content concentration of the solvent-based two-pack clear coating composition (Z) is preferably within a range of about 30 mass% to 70 mass%, and more preferably within a range of about 40 mass% to 60 mass%.

The solvent-based two-pack clear coating composition (Z) is used as an organic solvent-based coating composition. As the organic solvent used in this case, various organic solvents for coating compositions, such as aromatic or aliphatic hydrocarbon-based solvents, ester-based solvents, ketone-based solvents, and ether-based solvents, may be used. In the case where an organic solvent is used during the preparation of the hydroxyl group-containing resin, the used organic solvent may be used as it is or may be added appropriately.

(Application of solvent-based two-pack clear coating composition (Z))

The solvent-based two-pack clear coating composition (Z) described above is applied to the above uncured base coating film. The method for applying the solvent-based two-pack clear coating composition (Z) is not particularly limited. The application can be performed in the same method as those methods for the above primer coating composition (X) and the above base coating composition (Y), and can be performed by application methods such as air spray, airless spray, rotary atomization coating, and curtain coating.

When these application methods are performed, the solvent-based two-pack clear coating composition (Z) may be electrostatically applied if necessary. In the case where the solvent-based two-pack clear coating composition (Z) is electrostatically applied, the rotary atomization coating based on electrostatic application is preferred.

In the application of the solvent-based two-pack clear coating composition (Z), it is preferable to adjust the viscosity of the solvent-based two-pack clear coating composition (Z) to a viscosity range suitable for the application method. For example, in the rotary atomization coating based on the electrostatic application, it is preferable that the viscosity of the solvent-based two-pack clear coating composition (Z) is appropriately adjusted by using a solvent such as an organic solvent so as to reach a viscosity range of about 15 seconds to 60 seconds in the measurement performed by a ford cup No. 4 viscometer at 20°C.

The coating amount of the solvent-based two-pack clear coating composition (Z) is preferably an amount such that the cured-film thickness is about 10 $\mu$m to 50 $\mu$m.

After the solvent-based two-pack clear coating composition (Z) is applied to form a clear coating film, the clear coating film may, for example, be allowed to stand at room temperature for about 1 minute to 60 minutes in order to promote volatilization of volatile components.

4. Step (4)

Step (4) is a step of heating the uncured primer coating film formed in step (1), the uncured base coating film formed in step (2), and the uncured clear coating film formed in step (3) to simultaneously cure these coating films.

The heating can be performed by a common method. For example, a curing furnace such as a hot air furnace, an electric furnace, and an infrared induction heating furnace may be used. The heating temperature is preferably within a range of 60°C to 95°C, and more preferably within a range of 70°C to 90°C. The heating time is not particularly limited and is preferably within a range of 20 minutes to 40 minutes, and more preferably within a range of 25 minutes to 35 minutes.

In the present invention, at least one of the primer coating composition (X) and the base coating composition (Y) herein preferably contains an imino group-containing melamine resin having a weight average molecular weight of 400 to 4,000. At least one of the primer coating composition (X) and the base coating composition (Y) preferably contains a flat pigment. At least one of the primer coating composition (X) and the base coating composition (Y) is preferably a solvent-based coating composition.

In the present invention, an adhesive layer with an adhesive may be provided on the obtained multilayer coating film. The adhesive is not particularly limited, and for example, an adhesive containing moisture-curable isocyanates generally used to adhere glass members such as a windshield is preferred.

The windshield is a window member for a vehicle, and examples thereof include a front window, a rear window, a sunroof, and the like. The glass member may be inorganic glass, or may be resin glass. Examples of the resin glass include one made of a transparent resin such as polycarbonate resin or an acrylic resin. Examples of the vehicle include any kind of vehicles such as an automobile and a train, an aircraft, a submarine, and the like.

Examples

The present invention is described more specifically below by referring to Examples and Comparative Examples. However, the present invention is not limited to these Examples only. Here, both "parts" and "%" are a mass basis. The thickness of the coating film is based on the cured coating film.

[Production of acrylic modified chlorinated polyolefin resin (a1)]

<Production Example 1>

50 parts of "HARDLEN M-28P" (trade name, manufactured by Toyobo Co., Ltd., maleic acid modified chlorinated polyolefin, chlorination ratio 20%), 6 parts of 2-hydroxyethyl methacrylate, 21 parts of 2-ethylhexyl acrylate, 1 part of cyclohexyl methacrylate, 14 parts of ethyl acrylate, and 8 parts of methyl methacrylate were graft-polymerized in toluene in the presence of benzoyl peroxide, thereby obtaining an acrylic modified chlorinated polyolefin resin (a1) whose glass transition temperature of an acrylic moiety was -25°C, and whose solid content concentration was 40%.

[Production of Hydroxyl Group-Containing Acrylic Resin]

<Production Example 2>

To a reaction vessel equipped with a stirrer, a thermometer, a reflux condenser, and a dripping device, 45 parts of butyl acetate was added, and was stirred at 110°C while blowing nitrogen gas to the reaction vessel. A mixture of 50 parts of methyl methacrylate, 30 parts of ethyl acrylate, 8 parts of 2-hydroxyethyl methacrylate, 2 parts of acrylic acid, 10 parts of butyl acetate, and 0.6 parts of 2,2'-azobisisobutyronitrile was added dropwise to the reaction vessel at a uniform rate over four hours, followed by aging at the same temperature for two hours. Then, a mixture of 15 parts of butyl acetate and 1.0 part of 2,2'-azobisisobutyronitrile was further added dropwise to the reaction vessel over three hours, and the resulting mixture was aged for 1 hour after the completion of dropwise addition, followed by dilution with 30 parts of methyl ethyl ketone, thereby obtaining a hydroxyl group-containing acrylic resin (R-1) solution having a solid content concentration of 50%.

The obtained hydroxyl group-containing acrylic resin (R-1) had an acid value of 7.7 gKOH/g, a hydroxyl value of 65 mg KOH/g, and a weight average molecular weight of 20,000.

<Production Example 3>

To a reaction vessel equipped with a stirrer, a thermometer, a reflux condenser, and a dripping device, 45 parts of butyl acetate was added, and was stirred at 110°C while blowing nitrogen gas to the reaction vessel. A mixture of 60 parts of methyl methacrylate, 20 parts of styrene, 5 parts of ethyl acrylate, 4.4 parts of acrylic acid, 10 parts of butyl acetate, and 0.6 parts of 2,2'-azobisisobutyronitrile was added dropwise to the reaction vessel at a uniform rate over four hours, followed by aging at the same temperature for two hours. Then, a mixture of 15 parts of butyl acetate and 1.0 part of 2,2'-azobisisobutyronitrile was further added dropwise to the reaction vessel over three hours, and the resulting mixture was aged for one hour after the completion of dropwise addition, followed by dilution with 30 parts of methyl ethyl ketone, thereby obtaining a hydroxyl group-containing acrylic resin (R-2) solution having a solid content concentration of 50%.

The obtained hydroxyl group-containing acrylic resin (R-2) had an acid value of 5.0 gKOH/g, and a weight average molecular weight of 47,000.

[Production of Hydroxyl Group-Containing Polyester Resin]

<Production Example 4>

To a reaction vessel equipped with a thermometer, a thermostat, a stirrer, a reflux condenser, and a water separator, 52.6 parts (0.36 mol) of 1,6-hexanediol (molecular weight: 146), 10.3 parts (0.6 mol) of 1,4-cyclohexanedicarboxylic acid (molecular weight: 172), and 33.5 parts (0.25 mol) of trimethylolpropane (molecular weight: 134) were added, the temperature was raised from 160°C to 230°C over three hours, and then, the mixture was allowed to react at a temperature kept at 230°C until an acid value reached 5 mg KOH/g while distilling off the condensation water with the water separator. Next, dilution was performed with a mixed solvent of xylene and "SWAZOL 1000" (trade name, manufactured by Maruzen Petrochemical Co, Ltd., a petroleum-based aromatic hydrocarbon solvent) with a mass ratio of xylene to "SWAZOL 1000" being 50/50 such that the solid content concentration was 60%, thereby obtaining a hydroxyl group-containing polyester resin (R-3) solution.

The obtained hydroxyl group-containing polyester resin (R-3) had a hydroxyl value of 118 mg KOH/g and a number average molecular weight of 1,870.

[Preparation of primer coating composition (X)]

<Production Example 5>

A mixture of 15 parts (solid contents) of the acrylic modified chlorinated polyolefin resin (a1), 50 parts of "SUPERCHLON 422S" (trade name, manufactured by Nippon Paper Industries Co., Ltd., chlorinated polyolefin, chlorination degree: 22%, molecular weight: 110,000, solid content concentration: 20%), 15 parts (solid contents) of "FLEP-50" (trade name, manufactured by Toray Fine Chemicals Co., Ltd., a polysulfide modified bisphenol F-based epoxy resin, epoxy equivalent: 320, viscosity: 260 poise), 15 parts (solid contents) of "DURANATE MF-K60X" (trade name, manufactured by Asahi Kasei Corporation, an active methylene blocked polyisocyanate compound), 5 parts (solid contents) of "CYMEL 327" (trade name, manufactured by Allnex Corporation, an imino group-containing melamine resin, content of imino groups: 1.8 per triazine nucleus, weight average molecular weight: 650), 5 parts (solid contents) of "Ketjen Black EC300J" (trade name, manufactured by Lion Specialty Chemicals Co., Ltd., a conductive carbon black pigment), and 130 parts (solid contents) of "Ti-Pure R-902+" (trade name, manufactured by Chemours Corporation, titanium oxide) was mixed with a mixed solvent of xylene and toluene with a mass ratio of xylene to toluene being 1/1, thereby obtaining a primer coating composition (X-1) having viscosity, measured by using Ford Cup #4 at 20°C, of 13 seconds.

<Production Examples 6 to 18>

Primer coating compositions (X-2) to (X-14) were obtained in the same operation manner as in Production Example 5 except that the blending formulation in Production Example 5 was changed to those shown in Table 1.

The composition in Table 1 is described on the basis of solid contents, and components in Table 1 are as follows.

"SUMIDUR N3300": trade name, manufactured by Sumika Covestro Urethane Co., Ltd., a polyisocyanate compound, viscosity: 2.5 Pa·s;

"CYMEL 202": trade name, manufactured by Allnex Corporation, an imino group-containing melamine resin, content of imino groups: 1.7 per triazine nucleus, weight average molecular weight: 1,200;

"CYMEL 325": trade name, manufactured by Allnex Corporation, an imino group-containing melamine resin, content of imino groups: 1.9 per triazine nucleus, weight average molecular weight: 800;

"CYMEL 350": trade name, manufactured by Allnex Corporation, a melamine resin containing no imino groups, content of imino groups: 0 per triazine nucleus, weight average molecular weight: 550;

"Talc MA": trade name, manufactured by Nippon Talc Co., Ltd., talc, average particle diameter: 14 μm;

"TTK Talc": trade name, manufactured by Takehara Kagaku Kogyo Co., Ltd., talc, average particle diameter: 17 μm;
"T Talc": trade name, manufactured by Takehara Kagaku Kogyo Co., Ltd., talc, average particle diameter: 9 μm;
"High Rack": trade name, manufactured by Takehara Kagaku Kogyo Co., Ltd., talc, average particle diameter: 7 μm;
"BARIFINE BF-20": trade name, manufactured by Sakai Chemical Industry Co., Ltd., barium sulfate powder, average primary particle diameter: 0.03 μm; and
"BARIACE B-35": trade name, manufactured by Sakai Chemical Industry Co., Ltd., barium sulfate powder, average primary particle diameter: 0.3 μm.

Table 1

| Production Examples | | | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|
| Primer coating composition | | | X-1 | X-2 | X-3 | X-4 | X-5 | X-6 | X-7 | X-8 | X-9 | X-10 | X-11 | X-12 | X-13 | X-14 |
| Base resin | | Polyolefin resin (a1) | 15 | 15 | 15 | 15 | 15 | 15 | 15 | 15 | 15 | 15 | 15 | 15 | 15 | 15 |
| | | SUPERCHLON 422S | 50 | 50 | 50 | 50 | 50 | 50 | 50 | 50 | 50 | 50 | 50 | 50 | 50 | 50 |
| | | Acrylic resin (R-1) | - | - | - | - | - | - | - | - | 10 | - | - | - | - | - |
| | | Polyester resin (R-3) | - | - | - | - | - | - | - | - | - | 10 | - | - | - | - |
| Curing agent | Melamine resin | CYMEL 327 | 5 | - | - | - | - | - | - | - | - | - | - | - | - | - |
| | | CYMEL 202 | - | 5 | - | - | - | - | - | - | - | - | - | - | - | - |
| | | CYMEL 325 | - | - | 5 | - | - | - | - | - | - | - | - | - | - | - |
| | | CYMEL 350 | - | - | - | - | - | - | - | - | - | - | 5 | - | - | - |
| | | FLEP-50 | 15 | 15 | 15 | 15 | 15 | 15 | 15 | 15 | 15 | 15 | 15 | 15 | 15 | 15 |
| | | DURANATE MF-K60X | 15 | 15 | 15 | 20 | 20 | 20 | 20 | 20 | 10 | 10 | 15 | 20 | 20 | 15 |
| | | SUMIDUR N3300 | - | - | - | - | - | - | - | - | - | - | - | - | - | 5 |
| Pigment | Flat pigment | Talc MA | - | - | - | 10 | - | - | - | - | - | - | - | - | - | - |
| | | TTK Talc | - | - | - | - | 10 | - | - | - | - | - | - | - | - | - |
| | | T Talc | - | - | - | - | - | 10 | - | - | - | - | - | - | - | - |
| | | High Rack | - | - | - | - | - | - | 10 | - | - | - | - | - | - | - |
| | | BARIFINE BF-20 | - | - | - | - | - | - | - | - | - | - | - | 10 | - | - |
| | | BARIACE B-35 | - | - | - | - | - | - | - | - | - | - | - | - | 10 | - |
| | | Ketjen Black EC300J | 5 | 5 | 5 | 5 | 5 | 5 | 5 | 5 | 5 | 5 | 5 | 5 | 5 | 5 |
| | | Ti-Pure R-902+ | 130 | 130 | 130 | 130 | 130 | 130 | 130 | 130 | 130 | 130 | 130 | 130 | 130 | 130 |

[Preparation of Base Coating composition (Y)]

<Production Example 19>

A mixture of 35 parts (solid contents) of the hydroxyl group-containing acrylic resin (R-1), 20 parts (solid contents) of the hydroxyl group-containing acrylic resin (R-2), 35 parts (solid contents) of the hydroxyl group-containing polyester resin (R-3), 10 parts (solid contents) of "CYMEL 327", and 4 parts (solid contents) of "Raven 5000" (trade name, manufactured by Birla Carbon Corporation, black pigment) was mixed with a mixed solvent of xylene and toluene with a mass ratio of xylene to toluene being 1/1, thereby obtaining a base coating composition (Y-1) having viscosity, measured by using Ford Cup #4 at 20°C, of 13 seconds.

<Production Examples 20 to 32>

Base coating compositions (Y-2) to (Y-14) were obtained in the same operation manner as in Production Example 19 except that the blending formulation in Production Example 19 was changed to those shown in Table 2.
The composition in Table 2 is described on the basis of solid contents, and components in Table 2 are as follows.
"Mycoat508": trade name, manufactured by Allnex Corporation, an imino group-containing melamine resin, content of imino groups: 2.0 per triazine nucleus, weight average molecular weight: 1,500
"TWINCLPEARL SXC-SO" trade name, manufactured by Nihon Koken Kogyo Co., Ltd., mica, average particle diameter: 22 μm
"Non-leafing AOPASTE 7640NS": trade name, manufactured by Toyo Aluminium K.K., aluminum, average particle diameter: 21 μm

Table 2

| Production Examples | | | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|
| Base coating composition | | | Y-1 | Y-2 | Y-3 | Y-4 | Y-5 | Y-6 | Y-7 | Y-8 | Y-9 | Y-10 | Y-11 | Y-12 | Y-13 | Y-14 |
| Base resin | Hydroxyl group-containing resin | Acrylic resin (R-1) | 35 | 35 | 35 | 40 | 40 | 40 | 40 | 40 | 40 | 40 | 35 | 35 | 40 | 35 |
| | | Acrylic resin (R-2) | 20 | 20 | 20 | 20 | 20 | 20 | 20 | 20 | 20 | 25 | 20 | 20 | 20 | 20 |
| | | Polyester resin (R-3) | 35 | 35 | 35 | 40 | 40 | 40 | 40 | 40 | 40 | 35 | 35 | 35 | 40 | 35 |
| Curing agent | Melamine resin | CYMEL 327 | 10 | - | - | - | - | - | - | - | - | - | - | - | - | - |
| | | CYMEL 202 | - | 10 | - | - | - | - | - | - | - | - | - | - | - | - |
| | | CYMEL 325 | - | - | 10 | - | - | - | - | - | - | - | - | - | - | - |
| | | CYMEL 350 | - | - | - | - | - | - | - | - | - | - | 10 | - | - | - |
| | | Mycoat 508 | - | - | - | - | - | - | - | - | - | - | - | 10 | - | - |
| | Polyisocyanate compound | SUMIDUR N3300 | - | - | - | - | - | - | - | - | - | - | - | - | - | 10 |
| Pigment | Flat pigment | Talc MA | - | - | - | 10 | - | - | - | - | - | - | - | - | - | - |
| | | TTK Talc | - | - | - | - | 10 | - | - | - | - | - | - | - | - | - |
| | | T Talc | - | - | - | - | - | 10 | - | - | - | - | - | - | - | - |
| | | High Rack | - | - | - | - | - | - | 10 | - | - | - | - | - | - | - |
| | | SXC-SO | - | - | - | - | - | - | - | 11 | - | - | - | - | - | - |
| | | 7640NS | - | - | - | - | - | - | - | - | 18 | - | - | - | - | - |
| | | BARIFINE BF-20 | - | - | - | - | - | - | - | - | - | - | - | - | 10 | - |
| | | Raven 5000 | 4 | 4 | 4 | 4 | 4 | 4 | 4 | 4 | 4 | 4 | 4 | 4 | 4 | 4 |

EP 3 769 856 A1

[Preparation of solvent-based two-pack clear coating composition (Z)]

<Production Example 33>

100 parts (solid contents) of "SOFLEX 910" (trade name, manufactured by Kansai Paint Co., Ltd., a main agent of a two-pack clear coating composition containing a hydroxyl group-containing acrylic resin), and 30 parts (solid contents) of "DURANATE TLA 100" (trade name, manufactured by Asahi Kasei Corporation, a polyisocyanate compound, viscosity: 0.5/Pa·s) were mixed with a mixed solvent of xylene and toluene with a mass ratio of xylene to toluene being 1/1, thereby obtaining a solvent-based two-pack clear coating composition (Z-1) having viscosity, measured by using Ford Cup #4 at 20°C, of 13 seconds.

<Production Examples 34 to 37>

Solvent-based two-pack clear coating compositions (Z-2) to (Z-5) were obtained in the same operation manner as in Production Example 33 except that the blending formulation in Production Example 33 was changed to those shown in Table 3.
The composition in Table 3 is described on the basis of solid contents, and components in Table 3 are as follows.
"DESMODUR N 3900": trade name, manufactured by Sumika Covestro Urethane Co., Ltd., viscosity: 0.7/Pa·s
"DESMODUR N 3400": trade name, manufactured by Sumika Covestro Urethane Co., Ltd., viscosity: 0.2/Pa·s
"DURANATE TUL 100": trade name, manufactured by Asahi Kasei Corporation, viscosity: 0.3/Pa·s

Table 3

| Production Examples | 33 | 34 | 35 | 36 | 37 |
|---|---|---|---|---|---|
| Solvent-based two-pack clear coating composition | Z-1 | Z-2 | Z-3 | Z-4 | Z-5 |
| SOFLEX 910 (main agent) | 100 | 100 | 100 | 100 | 100 |
| DURANATE TLA 100 | 30 | - | - | - | - |
| SUMIDUR N 3300 | - | 30 | - | - | - |
| DESMODUR N 3900 | - | - | 30 | - | - |
| DESMODUR N 3400 | - | - | - | 30 | - |
| DURANATE TUL 100 | - | - | - | - | 30 |

<Preparation of Test Plate>

As a plastic member, "X430" (trade name, manufactured by Japan Polychem Corporation, 350 mm × 10 mm × 2 mm) was prepared. Then, a surface of "X430" was subjected to a degreasing treatment by being wiped with a gauze containing isopropyl alcohol, thereby obtaining a test plate.

[Formation of Multilayer Coating Film]

<Example 1>

The primer coating composition (X-1) prepared above was spray-applied to the test plate so as to have a cured-film thickness of 10 μm, thereby forming an uncured primer coating film. The test plate was allowed to stand at room temperature for three minutes, and then, the base coating composition (Y-10) was electrostatic-applied thereto so as to have a cured-film thickness of 15 μm, thereby forming an uncured base coating film. Next, the solvent-based two-pack clear coating composition (Z-1) was electrostatic-applied thereto so as to have a cured-film thickness of 30 μm, thereby forming an uncured clear coating film. The test plate was allowed to stand at room temperature for seven minutes, and then was heated at 80°C for 30 minutes, thereby obtaining a test plate on which a multilayer coating film in Example 1 was formed.
In the multilayer coating film in Example 1, the isocyanate amount $\alpha$ at an interface between the test plate and the primer coating film, and the isocyanate amount $\beta$ at an interface between the primer coating film and the base coating film were measured by the following methods.

(Measurement of Isocyanate Amount α at Interface between Test Plate and Primer Coating Film)

An ATR-IR measurement was performed on a surface of the multilayer coating film, on one side where the multilayer coating film was in contact with the test plate, under the following conditions. The infrared absorption peak intensity at 1730 cm$^{-1}$ derived from ester bonds and the infrared absorption peak intensity at 1670 cm$^{-1}$ derived from urethane bonds were measured. The numerical values of peak area ratios (urethane-bond peak area/ester-bond peak area) were applied to a calibration curve created in advance to measure the isocyanate amount, and the isocyanate amount α (parts by mass) per 100 parts by mass of resin solid contents of the primer coating composition contained in the peeled multi-layer coating film was determined.

The calibration curve was obtained by plotting the above peak area ratios of the samples obtained by adding a polyisocyanate compound contained in the solvent-based two-pack clear coating composition (Z-1) to the primer coating composition (X-1).

ATR-IR Measurement Conditions

Device: Fourier transform infrared spectrophotometer "FT/IR610" manufactured by JASCO Corporation
Measurement Mode: ATR method (prism: zinc selenide, angle of incidence: 45°)
Resolution: 4 cm$^{-1}$
Number of accumulation: 16
Wavelength range: 400 cm$^{-1}$ to 4,000 cm$^{-1}$

(Measurement of Isocyanate Amount β at Interface between Primer Coating Film and Base Coating Film)

The isocyanate amount β was measured in the same method as the method of measuring the isocyanate amount α except that: (i) the multilayer coating film supplied for the measurement was obtained by applying the base coating composition (Y-10) to an object so as to have a cured-film thickness of 15 μm, next, applying the solvent-based two-pack clear coating composition (Z-1) thereto so as to have a cured-film thickness of 30 μm, and then, heating at 80°C for 30 minutes; and (ii) the above calibration curve was obtained by plotting the above peak area ratios of the samples obtained by adding a polyisocyanate compound contained in the solvent-based two-pack clear coating composition (Z-1) to the base coating composition (Y-10).

Various coating-film performance tests described below were performed on the test plate on which the multilayer coating film in Example 1 was formed. The results are shown in Table 4.

[Coating-Film Performance Test]

<Initial Adhesion>

"HAMATITE WS-272" (trade name, manufactured by Yokohama Rubber Co., Ltd., window adhesive) was applied to a test plate so as to have a thickness of 5 mm to 7 mm and a width of 20 mm, and the test plate was allowed to stand at room temperature for 10 days.

The cured adhesive layer was pulled with a hand in a direction of 180° relative to the coating film while cutting into the adhesive layer with a cutter knife in an angle of about 45° relative to the coating film at an interval of 2 mm to 3 mm until the cutter knife reached a surface of the coating film, and thus the adhesive layer was peeled off. The peeled state after peeling the adhesive layer was evaluated in accordance with the following criteria. In the case where the initial adhesion was evaluated as "C" or "D", the standard was not achieved.

A: The width of an exposed surface of an object or a coating film from a cut portion was less than 0.5 mm.
B: The width of an exposed surface of an object or a coating film from a cut portion was equal to or more than 0.5 mm and less than 1.0 mm.
C: The width of an exposed surface of an object or a coating film from a cut portion was equal to or more than 1.0 mm and less than 3.0 mm.
D: The width of an exposed surface of an object or a coating film from a cut portion was 3.0 mm or more.

<Adhesion After Water Resistance Test>

"HAMATITE WS-272" was applied to a test plate to have a thickness of 5 mm to 7 mm and a width of 20 mm, and the test plate was allowed to stand at room temperature for 10 days. After that, each test plate was immersed in a constant-temperature water bath set at 50°C for 240 hours. Then, water in each test plate was sufficiently wiped, and the test plate was cooled at room temperature for one hour.

The cured adhesive layer was pulled with a hand in a direction of 180° relative to the coating film while cutting into the adhesive layer with a cutter knife in an angle of about 45° relative to the coating film at an interval of 2 mm to 3 mm until the cutter knife reached a surface of the coating film, and thus the adhesive layer was peeled off. The peeled state after peeling the adhesive layer was evaluated in accordance with the following criteria. In the case where the adhesion after the water resistance test was evaluated as "C" or "D", the standard was not achieved.

A: The width of an exposed surface of an object or a coating film from a cut portion was less than 0.5 mm.
B: The width of an exposed surface of an object or a coating film from a cut portion was equal to or more than 0.5 mm and less than 1.0 mm.
C: The width of an exposed surface of an object or a coating film from a cut portion was equal to or more than 1.0 mm and less than 3.0 mm.
D: The width of an exposed surface of an object or a coating film from a cut portion was 3.0 mm or more.

<Examples 2 to 18 and Comparative Examples 1 to 13>

Test plates, on which multilayer coating films in Examples 2 to 18 and Comparative Examples 1 to 13 were formed, were obtained in the same operation manner as in Example 1 except that the primer coating composition, the base coating composition, and the solvent-based two-pack clear coating composition in Example 1 were changed to those shown in Table 4.

For the multilayer coating films in Examples 2 to 18 and Comparative Examples 1 to 13, the isocyanate amount (parts by mass) per 100 parts by mass of resin solid contents in primer coating compositions contained in peeled multilayer coating films and the isocyanate amount (parts by mass) per 100 parts by mass of resin solid contents in base coating compositions contained in the peeled multilayer coating films were determined in the same manner as in Example 1. Results are shown in Tables 4 to 6.

Various coating-film performance tests, which were the same as those in Example 1, were performed on the test plates on which the multilayer coating films in Examples 2 to 18 and Comparative Examples 1 to 13 were formed. Results are shown in Tables 4 to 6.

Table 4

| | | Examples | | | | | | | | |
|---|---|---|---|---|---|---|---|---|---|---|
| | | 1 | 2 | 3 | 4 | 5 | 6 | 7 | 8 | 9 |
| Primer coating composition | | X-1 | X-2 | X-3 | X-4 | X-5 | X-6 | X-7 | X-8 | X-8 |
| Base coating composition | | Y-10 | Y-10 | Y-10 | Y-10 | Y-10 | Y-10 | Y-10 | Y-1 | Y-2 |
| Clear coating composition | | Z-1 | Z-1 | Z-1 | Z-1 | Z-1 | Z-1 | Z-1 | Z-1 | Z-1 |
| Isocyanate amount $\alpha$ (parts by mass) | | 0.5 | 0.5 | 0.5 | 0.0 | 0.0 | 0.5 | 0.5 | 0.0 | 0.0 |
| Isocyanate amount $\beta$ (parts by mass) | | 12.5 | 12.5 | 12.5 | 12.5 | 12.5 | 12.5 | 12.5 | 0.0 | 0.0 |
| Coating-film performance test | Initial adhesion | A | A | A | A | A | A | A | A | A |
| | Adhesion after water resistance test | B | B | B | A | A | B | B | A | A |

Table 5

| | Examples | | | | | | | | |
|---|---|---|---|---|---|---|---|---|---|
| | 10 | 11 | 12 | 13 | 14 | 15 | 16 | 17 | 18 |
| Primer coating composition | X-8 | X-8 | X-8 | X-8 | X-8 | X-8 | X-8 | X-8 | X-8 |
| Base coating composition | Y-3 | Y-4 | Y-5 | Y-6 | Y-7 | Y-8 | Y-9 | Y-10 | Y-10 |
| Clear coating composition | Z-1 | Z-1 | Z-1 | Z-1 | Z-1 | Z-1 | Z-1 | Z-2 | Z-3 |

(continued)

| | | Examples | | | | | | | | |
|---|---|---|---|---|---|---|---|---|---|---|
| | | 10 | 11 | 12 | 13 | 14 | 15 | 16 | 17 | 18 |
| Isocyanate amount α (parts by mass) | | 0.0 | 0.0 | 0.0 | 0.0 | 0.0 | 0.0 | 0.0 | 0.0 | 0.0 |
| Isocyanate amount β (parts by mass) | | 0.0 | 1.1 | 0.8 | 1.4 | 1.5 | 1.1 | 0.7 | 1.4 | 1.9 |
| Coating-film performance test | Initial adhesion | A | A | A | A | A | A | A | A | A |
| | Adhesion after water resistance test | A | A | A | B | B | A | A | A | B |

Table 6

| | | Comparative Examples | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Primer coating composition | | X-8 | X-9 | X-10 | X-11 | X-12 | X-13 | X-14 | X-8 | X-8 | X-8 | X-8 | X-8 | X-8 |
| Base coating composition | | Y-10 | Y-10 | Y-10 | Y-10 | Y-10 | Y-10 | Y-10 | Y-11 | Y-12 | Y-13 | Y-14 | Y-10 | Y-10 |
| Clear coating composition | | Z-1 | Z-1 | Z-1 | Z-1 | Z-1 | Z-1 | Z-1 | Z-1 | Z-1 | Z-1 | Z-1 | Z-4 | Z-5 |
| Isocyanate amount $\alpha$ (parts by mass) | | 2.0 | 2.0 | 2.0 | 2.0 | 2.0 | 2.0 | 7.0 | 2.0 | 2.0 | 2.0 | 2.0 | 2.0 | 2.0 |
| Isocyanate amount 3 (parts by mass) | | 12.5 | 12.5 | 12.5 | 12.5 | 12.5 | 12.5 | 12.5 | 12.5 | 12.5 | 12.5 | 12.5 | 5.0 | 5.0 |
| Coating-film performance test | Initial adhesion | C | C | D | D | D | D | D | D | D | D | D | C | C |
| | Adhesion after water resistance test | C | C | D | D | D | D | D | D | D | D | D | C | C |

Although the present invention is described in detail with reference to specific embodiments, it will be apparent to those skilled in the art that various changes and modifications can be made without departing from the spirit and scope of the invention. The present application is based on Japanese Patent Application No. 2018-53642 filed on March 21, 2018, contents of which are incorporated herein by reference.

**Claims**

1. A method for forming a multilayer coating film, the method comprising performing the following steps sequentially:

   step (1): a step of applying a primer coating composition (X) to an object to form an uncured primer coating film;
   step (2): a step of applying a base coating composition (Y) to the uncured primer coating film obtained in step (1) to form an uncured base coating film;
   step (3): a step of applying a solvent-based two-pack clear coating composition (Z) containing a hydroxyl group-containing resin and a polyisocyanate compound to the uncured base coating film obtained in step (2) to form an uncured clear coating film; and
   step (4): a step of heating the uncured primer coating film formed in step (1), the uncured base coating film formed in step (2), and the uncured clear coating film formed in step (3) to simultaneously cure these coating films, wherein at least one of the following (A) and (B) is satisfied:

   (A) an isocyanate amount at an interface between the object and the cured primer coating film is 1.5 parts by mass or less based on 100 parts by mass of a resin solid content of the primer coating composition (X), the isocyanate amount being measured by attenuated total reflection infrared spectroscopy; and
   (B) an isocyanate amount at an interface between the cured primer coating film and the cured base coating film is 3.5 parts by mass or less based on 100 parts by mass of a resin solid content of the base coating composition (Y), the isocyanate amount being measured by attenuated total reflection infrared spectroscopy.

2. The method for forming a multilayer coating film according to claim 1, wherein at least one of the primer coating composition (X) and the base coating composition (Y) contains an imino group-containing melamine resin having a weight average molecular weight of 400 to 4,000.

3. The method for forming a multilayer coating film according to claim 1 or 2, wherein at least one of the primer coating composition (X) and the base coating composition (Y) contains a flat pigment.

4. The method for forming a multilayer coating film according to any one of claims 1 to 3, wherein the polyisocyanate compound has viscosity at 25°C being within a range of 0.35 Pa·s to 5 Pa·s.

5. The method for forming a multilayer coating film according to any one of claims 1 to 4, wherein at least one of the primer coating composition (X) and the base coating composition (Y) is a solvent-based coating composition.

## INTERNATIONAL SEARCH REPORT

International application No.

PCT/JP2019/011617

### A. CLASSIFICATION OF SUBJECT MATTER
Int.Cl. B05D1/36(2006.01)i,     B05D3/00(2006.01)i,     B05D3/02(2006.01)i, B05D7/24(2006.01)i

According to International Patent Classification (IPC) or to both national classification and IPC

### B. FIELDS SEARCHED

Minimum documentation searched (classification system followed by classification symbols)
Int.Cl. B05D1/36, B05D3/00, B05D3/02, B05D7/24

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2013-212482 A (KANSAI PAINT CO., LTD.) 17 October 2013, claim 1, paragraphs [0024], [0077]– [0081], [0166], [0244], [0257], [0265], [0271], [0313], [0354], [0383] (Family: none) | 1–4<br>5 |
| A | WO 2017/131100 A1 (NIPPON PAINT AUTOMOTIVE COATINGS CO., LTD.) 03 August 2017, entire text & US 2019/0030563 A1, whole document & EP 3412367 A1 & CN 109070131 A | 1–5 |

☒ Further documents are listed in the continuation of Box C.     ☐ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 14 June 2019 (14.06.2019) | 25 June 2019 (25.06.2019) |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2019/011617 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2008-126140 A (NIPPON PAINT CO., LTD.) 05 June 2008, entire text & US 2008/0213484 A1, whole document & CA 2611426 A1 | 1-5 |
| A | JP 2013-193058 A (HONDA MOTOR CO., LTD.) 30 September 2013, entire text & US 2015/0072141 A1, whole document & WO 2013/140238 A1 & EP 2834015 A1 & CA 2863456 A & CN 104271262 A & MX 2014010605 A | 1-5 |
| A | JP 2004-41842 A (TOYOTA MOTOR CORP.) 12 February 2004, entire text (Family: none) | 1-5 |
| A | WO 2011/010539 A1 (KANSAI PAINT CO., LTD.) 27 January 2011, entire text & US 2012/0107619 A1, whole document & US 2015/0225596 A1 & CA 2768557 A & CN 102471630 A & CN 104371512 A | 1-5 |
| A | WO 2008/050756 A1 (KANSAI PAINT CO., LTD.) 02 May 2008, entire text & US 2009/0274846 A1, whole document & GB 2456696 A & CN 101528872 A | 1-5 |
| A | WO 2014/045657 A1 (KANSAI PAINT CO., LTD.) 27 March 2014, entire text & US 2015/0218405 A1, whole document & EP 2898960 A1 & CN 104661763 A | 1-5 |

Form PCT/ISA/210 (continuation of second sheet) (January 2015)

## REFERENCES CITED IN THE DESCRIPTION

**Patent documents cited in the description**

- JP 2012524673 A
- JP 2017154089 A
- JP 2008056914 A
- JP 2009102452 A
- JP 2018053642 A

**Non-patent literature cited in the description**

- POLYMERHANDBOOK. 1999